# EUROPEAN PATENT SPECIFICATION

(11) **EP 2 585 362 B1**
(45) Date of publication and mention of the grant of the patent: **14.05.2014**
(21) Application number: 11743631.1
(22) Date of filing: 24.06.2011
(51) Int. Cl.: B62K 15/00, B62K 19/18, F16B 7/04, F16L 37/23

(54) **JOINT LOCKING ASSEMBLY AND METHOD**
VERBINDUNGS- UND VERRIEGELUNGSSYSTEM UND METHODE
SYSTEME DE BLOCAGE ARTICULAIRE ET METHODE

(30) Priority: 24.06.2010 US 358382 P
(43) Date of publication of application: 01.05.2013
(73) Proprietor: Studio Moderna SA, 6900 Lugano (CH)
(72) Inventor: SAVSEK, Zdenko, 1420 Trbovlje (SI); VOZELJ, Ales, 1420 Trbovlje (SI)
(74) Representative: Müller - Hoffmann & Partner
(86) International application number: PCT/IB2011/052793
(87) International publication number: WO 2011/161657

(56) References cited:
- CH-A- 195 205
- DE-A1-102007 025 078
- DE-C- 202 044
- DE-U1-202004 016 336
- FR-A1- 2 545 554
- US-A- 645 145
- US-A- 4 491 337
- US-A1- 2007 290 479

## Description

This application has priority to and is a nonprovisional of U.S. Application Serial No. 61/358,382, filed June 24, 2010, and entitled, "Joint Locking Assembly and Method".

### FIELD

The present disclosure relates to joint locking assemblies and methods of locking and folding mechanical components.

### BACKGROUND

Joint locking assemblies are employed in many different devices to lock joint elements in generally fixed relation. The use of joint assemblies can serve to enable folding of a device, thereby reducing the area occupied by the devices such as for storage or transport purposes. In such mechanisms, the mechanical components to be folded are joined together at joints, which are rigidly fixed or locked in use, but releasable for folding. The reduced size of apparatus that can be folded is advantageous in that the folded device can take up less storage space than the unfolded device, or have a shorter desired dimension, and also might be easier to carry.

Various mechanisms have been utilized for joining together mechanical components in a foldable fashion, and also for folding and unfolding mechanical components and for locking the components at joints. For example, hinge assemblies may be used in which the hinge assemblies are secured to the components to be folded. A disadvantage of this approach is relatively increased material or manufacturing costs because of the addition of the hinge assemblies to the apparatus. Other examples of hinge assemblies are those utilizing latching or locking mechanisms in conjunction with rotatable hinges. Such locking assemblies suffer disadvantages such as user manipulation of latches or levers. Some locking assemblies may require use of a special tool to unlock the mechanism.

Folding bicycles are one field in where there has been technical development related to joint locking mechanisms. With foldable bicycles, storage space and user transport of bicycles, such as for commuting or recreational purposes is often desired. Many known folding bicycles utilize joint locking assemblies at various junctures of the bicycle assembly, including to fold the bicycle wheels and handlebars.

One deficiency of some joint and joint locking assemblies is difficulty in providing a substantially rigid coupling while providing ease of operation and reduction of mechanical components. In one example of a folding bicycle wheel assemblies such as found in Trebert U.S. patent no. 645,145, a folding front fork having a pair of fork sides that are connected by an integral arch is described. The fork sides are journaled to legs of a stem. In this example, lugs are included on the arch and the stem that align when the fork sides are placed in a position for use. A spring-latch extends upward through the lug of the stem and into the lug of the arch when the fork sides are locked in position. The arch and stem and the respective lugs are configured so that the lug of the arch is disposed above the lug of the stem when the fork is in a position for use.

In this configuration, the fork is connected to the legs of the stem at a position spaced from the arch and between the arch and the fork sides. When the fork is rotated relative to the stem into a folded position, the arch and fork sides rotate toward opposite sides of the stem. A portion of the fork rotates to a position further forward than the riding position. Additionally, operation of the spring latch may be difficult for some users due to its positioning.

Another example of a joint locking assembly for a wheel, is provided in Camps U.S. patent no. 3,572,757, which relates to a front fork assembly in which a lower box is secured to the fork. When the fork is locked in a riding position, a pin extends through an upper box and a bayonet foot of the pin engages a keyed recess in the lower box and the pin pulls the lower box upward so that it engages the upper box. The bayonet foot of the pin and the keyed recess of the lower box are engaged by the bayonet foot being inserted into the recess and turned using a lever. The pin extends through a bearing tube so that the lever is located adjacent the handlebars. Although this configuration may be suited to heavier linkages, a disadvantage also is its bulk and that self-locking is not easily promoted.

DE 10 2007 025078 A1, on which the preamble of claim 1 is based, relates to a device for transmitting a torque to a screw tool element in the form of a socket insert, a ratchet extension or the like, with a drive side polygonal for insertion into a shape adapted polygonal opening of the screw tool element, with a in a ball receiving cavity of a polygonal face of the drive side polygonal inset locking ball to enter into a locking recess of a polygonal face of said polygonal opening arranged with one in an axial cavity transferring member engaging a first portion on the locking ball and a second portion by a switch which is moved when changing from a released position into a locking position in the axial direction of the axial cavity in such a way, that the screw tool element in the release position by the drive side polygon is removable and is tied in the locked position to the drive side polygon.

US 645 145 A discloses a folding bicycle, on which the respective preamble of claims 7 and 11 is based.

Therefore, there exists a need for a folding and joint locking mechanism that provides one or more of relative ease of user operation, cost and manufacturing advantages, a secure joint lock, self-locking operation and optionally is operable without the use of an external release tool. One application in which a need exists is a folding bicycle, in which releasable joints are provided having one or more of these advantages.

### SUMMARY

The present disclosure, and its many embodiments, alleviates to a great extent the disadvantages of known linkage assembly locking assemblies by providing a locking assembly in which a displaceable structure, such as including a bearing ball, is disposed between a two body elements. Such body elements may include one that is called a stationary body and another that is called a rotatable body. The stationary body may be fixed in relation to other elements of the assembly whereas the rotatable body moves relative to those elements. Operating an actuation linkage, such as by pressing or pulling one or more releases, such as buttons or pull tabs, causes displacement of the bearing ball and unlocks the joint locking assembly. In an unlocked position a rotatable body is movable by rotating it about a hinge.

Embodiments of a system of folding mechanical components include one or more bearing ball, a first body defining at least one bearing ball receiving space sized to receive at least a portion of the bearing ball, a second body rotatably coupled to the first body and one or more button or tab members (referred to herein collectively as "button" or "buttons" or "button member" or "button members"). Each button member defines a recess with a rounded concave portion sized to receive at least a portion of the bearing ball and may define a partially hollow interior housing a spring. The second body defines one or more channels therein, and the two button members are sized to be disposed in the channels. The first body may define a second bearing ball receiving space to receive the bearing ball when the second body is in a folded position.

In an unlocked position the bearing ball contacts the rounded concave or recessed portions of the button members and has limited contact with the bearing ball receiving space of the first body. In a locked position the bearing ball contacts the recesses of the button members and has relatively more contact with the bearing ball receiving space of the first body. In an unlocked position the second body is foldable by rotating it about a hinge. Pressing or pulling the button members moves the system from a locked position to an unlocked position. In particular, pressing or pulling the button members urges the bearing ball from a location in contact with the recesses of the button members to a location in contact with the rounded concave portions of the button members. The second body may be part of a folding bicycle such as a component of a foldable bicycle handlebar assembly or a component of a foldable bicycle wheel assembly.

Among the embodiments of the disclosure are methods and apparatus of folding mechanical components using joint locking assemblies comprising providing a first body, a rotatable body rotatably coupled to the first body and defining one or more channels therein, and one or more button members disposed in the channels. Each button member may define a partially hollow interior housing a spring. The methods further include providing a bearing ball at a location between a bearing ball receiving space in the first body and recesses of the button members such that the bearing ball has substantial contact with the bearing ball receiving space of the first body. The bearing ball is then displaced such that it moves from a location in contact with the recesses of the button members to a location in contact with rounded concave portions of the button members. The displacing step may include pressing or pulling the button members. As a result of this displacement the bearing ball has relatively less contact with the bearing ball receiving space of the first body and the second body is foldable by rotating it about a hinge. Then the first body is rotated relative to the second body. The rotatable body may be part of a folding bicycle such as a component of a foldable bicycle handlebar assembly or a component of a foldable bicycle wheel assembly.

Other embodiments of the disclosure include folding bicycles, outdoor umbrellas and any other device requiring two or more members to be joined by a locking joint. One form of folding bicycle includes a frame, a foldable fork assembly, a handlebar assembly and one or more joint locking assembly. The frame optionally includes a seat tube, a down tube and a bearing tube. The foldable fork assembly in one embodiment can be coupled to or be otherwise in fixable relation to the bearing tube and has a wheel mounted thereon. The handlebar assembly is also optionally is rotatably coupled to the frame such as via a stem, and typically can include at least two handlebars.

In the present disclosure, a joint locking assembly can be constructed including a bearing ball, a stationary body defining at least one concave recess sized to receive at least a portion of the bearing ball, a rotatable body rotatable in relation to the stationary body and one or more button members. Each button member defines a recess with a rounded concave portion sized to receive at least a portion of the bearing ball and may define a partially hollow interior housing a spring. The rotatable body defines two channels therein, and the two button members are sized to be disposed in the channels. The stationary body may define a second concave recess to receive the bearing ball when the rotatable body is in a folded position.

In an example of such a joint locking assembly, in an unlocked position the bearing ball contacts the rounded concave portions of the button members and has limited contact with the bearing ball receiving space of the stationary body. In a locked position the bearing ball contacts the recesses of the button members and has relatively more contact with the bearing ball receiving space of the stationary body. In an unlocked position the rotatable body is foldable by rotating it about a hinge. Pressing or pulling the button members moves the system from a locked position to an unlocked position. In particular, pressing or pulling the button members urges the bearing ball from a location in contact with the recesses of the button members to a location in contact with the rounded concave portions of the button members. In some embodiments the stationary body may be a handlebar mounting member coupled to the frame assembly, and the rotatable body may be a mounting assembly having a handlebar mounted thereon. The joint locking assembly also may be part of the foldable fork assembly. In such embodiments when the joint locking assembly is in a locked position the wheel is in a riding position, and when the joint locking assembly is in an unlocked position the wheel is rotatable to a folded position.

Thus, embodiments of the disclosure provide folding and joint locking mechanisms wherein a bearing ball is disposed between a stationary body and a rotatable body. Pressing or pulling one or more button members causes displacement of the bearing ball and unlocks the joint locking assembly. In an unlocked position a rotatable body is foldable by rotating it about a hinge. Embodiments of disclosed folding and joint locking mechanisms are easy to use without tools or extra hinge assemblies. These and other features and advantages of the present disclosure will be appreciated from review of the following detailed description of the disclosure, along with the accompanying figures in which like reference numerals refer to like parts throughout.

### BRIEF DESCRIPTION OF THE DRAWINGS

The foregoing and other objects of the invention will be apparent upon consideration of the following detailed description, taken in conjunction with the accompanying drawings, in which:
FIG. 1 is a perspective view of an embodiment of a button member of a joint locking assembly in accordance with the present disclosure;
FIG. 2 is a cross-sectional perspective view of an embodiment of a button member of a joint locking assembly in accordance with the present disclosure;
FIG. 3A is a side cross-sectional view of an embodiment of a button member and bearing ball of a joint locking assembly in accordance with the present disclosure;
FIG. 3B is a side cross-sectional view of an embodiment of a button member and bearing ball of a joint locking assembly in accordance with the present disclosure shown in an unlocked position;
FIG. 3C is a side cross-sectional view of an embodiment of a button member and bearing ball of a joint locking assembly in accordance with the present disclosure shown in a locked position;
FIG. 4 is a perspective view of an embodiment of a joint locking assembly in accordance with the present disclosure;
FIG. 5 is a detail perspective view of an embodiment of a joint locking assembly in accordance with the present disclosure;
FIG. 6A is a detail perspective view of an embodiment of a joint locking assembly in accordance with the present disclosure;
FIG. 6B is a perspective view of an embodiment of a first body of a joint locking assembly in accordance with the present disclosure;
FIG. 7A is a perspective view of an embodiment of a joint locking assembly in accordance with the present disclosure;
FIG. 7B is a perspective view of an embodiment of a joint locking assembly in accordance with the present disclosure;
FIG. 8 is a side cross-section view of an embodiment of a joint locking assembly in accordance with the present disclosure;
FIG. 9 is a side cross-section view of an embodiment of a joint locking assembly in accordance with the present disclosure;
FIG. 10 is a side cross-section view of an embodiment of a joint locking assembly in accordance with the present disclosure shown in a folded configuration;
FIG. 11 is a side view of a foldable bicycle employing embodiments of joint locking assemblies in accordance with the present disclosure;
FIG. 12A is a perspective view of an embodiment of a joint locking assembly in accordance with the present disclosure shown in use with a bicycle handlebar assembly;
FIG. 12B is a rear view of an embodiment of a joint locking assembly in accordance with the present disclosure shown in use with a bicycle handlebar assembly;
FIG. 13 is an exploded view of an embodiment of a joint locking assembly in accordance with the present disclosure shown in use with a bicycle handlebar assembly;
FIG. 14A is a perspective view of an embodiment of a rotatable body of a joint locking assembly in accordance with the present disclosure;
FIG. 14B is a side cross-sectional view of an embodiment of a rotatable body of a joint locking assembly in accordance with the present disclosure shown in a locked position;
FIG. 14C is a side cross-sectional view of an embodiment of a rotatable body of a joint locking assembly in accordance with the present disclosure shown in an unlocked position;
FIG. 14D is a side cross-sectional view of an embodiment of a rotatable body of a joint locking assembly in accordance with the present disclosure shown in a locked position;
FIG. 15 is a front cross-sectional view of an embodiment of a joint locking assembly in accordance with the present disclosure;
FIG. 16 is a front cross-sectional view of an embodiment of a joint locking assembly in accordance with the present disclosure shown in use with a bicycle handlebar assembly;
FIG. 17 is a perspective view of an embodiment of a joint locking assembly in accordance with the present disclosure shown in use with a bicycle handlebar assembly;
FIG. 18 is a perspective view of an embodiment of a joint locking assembly in accordance with the present disclosure shown in use with a bicycle handlebar assembly;
FIG. 19 is a perspective view of an embodiment of a joint locking assembly in accordance with the present disclosure shown in use with a bicycle handlebar assembly;
FIG. 20A is a side view of an embodiment of a joint locking assembly in accordance with the present disclosure shown in use with a foldable front fork assembly;
FIG. 20B is a front cross-sectional view of an embodiment of a joint locking assembly in accordance with the present disclosure shown in use with a foldable front fork assembly;
FIG. 21 is an exploded view of an embodiment of a joint locking assembly in accordance with the present disclosure shown in use with a foldable front fork assembly;
FIG. 22A is a front perspective view of an embodiment of a joint locking assembly in accordance with the present disclosure shown in use with a foldable front fork assembly;
FIG. 22B is a rear perspective view of an embodiment of a joint locking assembly in accordance with the present disclosure shown in use with a foldable front fork assembly;
FIG. 23 is a side cross-sectional view of an embodiment of a joint locking assembly in accordance with the present disclosure shown in use with a foldable front fork assembly;
FIG. 24A is a side view of an embodiment of a joint locking assembly in accordance with the present disclosure shown in use with a foldable front fork assembly shown in a riding position;
FIG. 24B is a side view of an embodiment of a joint locking assembly in accordance with the present disclosure shown in use with a foldable front fork assembly shown in a folded position;
FIG. 25 is a perspective view of embodiments of components of a folding system in accordance with the present disclosure;
FIG. 26 is a perspective view of an embodiment of a folding system in accordance with the present disclosure shown in use with a foldable rear fork assembly;
FIG. 27 is an exploded view of an embodiment of a folding system in accordance with the present disclosure shown in use with a foldable rear fork assembly;
FIG. 28A is a perspective view of an embodiment of a folding system in accordance with the present disclosure shown in use with a foldable rear fork assembly;
FIG. 28B is a side view of an embodiment of a folding system in accordance with the present disclosure shown in use with a foldable rear fork assembly;
FIG. 28C is a front cross-sectional view of an embodiment of a folding system in accordance with the present disclosure shown in use with a foldable rear fork assembly;
FIG. 29 is a perspective view of an embodiment of a folding system in accordance with the present disclosure shown in use with a foldable rear fork assembly;
FIG. 30 is a perspective view of an embodiment of a foldable rear fork assembly and a portion of a folding system in accordance with the present disclosure;
FIG. 31 is a perspective view of an embodiment of a rotatable body portion of a folding system in accordance with the present disclosure;
FIG. 32 is a perspective view of an embodiment of a rotatable body portion of a folding system in accordance with the present disclosure;
FIG. 33 is a perspective view of an embodiment of a button member of a folding system in accordance with the present disclosure;
FIG. 34A is a perspective view of a rotatable body of a folding system in accordance with the present disclosure;
FIG. 34B is a cutaway view of a rotatable body of a folding system in accordance with the present disclosure;
FIG. 35A is a front perspective view of an embodiment of a shield of a folding system in accordance with the present disclosure;
FIG. 35B is a rear perspective view of an embodiment of a shield of a folding system in accordance with the present disclosure;
FIG. 36 is a perspective view of an embodiment of a folding system in accordance with the present disclosure shown in use with a foldable rear fork assembly;
FIG. 37 is a perspective view of components of an embodiment of a folding system in accordance with the present disclosure;
FIG. 38 is a perspective view of an embodiment of a button member in accordance with the present disclosure;
FIG. 39A is a cutaway view of an embodiment of a folding system in accordance with the present disclosure shown in use with a foldable rear fork assembly;
FIG. 39B is a cutaway view of an embodiment of a folding system in accordance with the present disclosure shown in use with a foldable rear fork assembly;
FIG. 39C is a cutaway view of an embodiment of a folding system in accordance with the present disclosure shown in use with a foldable rear fork assembly;
FIG. 40 is a perspective view of an embodiment of a folding system in accordance with the present disclosure shown in use with a foldable seat stay assembly;
FIG. 41A is a perspective view of an embodiment of a stationary body of a folding system in accordance with the present disclosure;
FIG. 41B is a perspective view of an embodiment of a stationary body of a folding system in accordance with the present disclosure;
FIG. 42A is a perspective view of an embodiment of rotatable bodies in accordance with the present disclosure shown in use with a foldable seat stay assembly;
FIG. 42B is a perspective view of an embodiment of rotatable bodies in accordance with the present disclosure shown in use with a foldable seat stay assembly;
FIG. 42C is a rear cross-sectional view of an embodiment of rotatable bodies in accordance with the present disclosure shown in use with a foldable seat stay assembly;
FIG. 43 is a cutaway view of an embodiment of a folding system in accordance with the present disclosure shown in use with a foldable seat stay assembly;
FIG. 44A is a disassembled view of an embodiment of a stationary body and rotatable body of a folding system in accordance with the present disclosure;
FIG. 44B is a disassembled view of an embodiment of a stationary body and rotatable body of a folding system in accordance with the present disclosure;
FIG. 45 is a perspective view of an embodiment of a folding system in accordance with the present disclosure shown in use with a foldable seat stay assembly;
FIG. 46 is a perspective view of an embodiment of a folding system in accordance with the present disclosure shown in use with a foldable down tube assembly;
FIG. 47 is a perspective view of an embodiment of a folding system in accordance with the present disclosure shown in use with a foldable down tube assembly;
FIG. 48 is an exploded view of an embodiment of a folding system in accordance with the present disclosure shown in use with a foldable down tube assembly;
FIG. 49 is a cutaway view of an embodiment of a folding system in accordance with the present disclosure shown in use with a foldable down tube assembly;
FIG. 50A is a perspective view of an embodiment of a folding system in accordance with the present disclosure shown in use with a foldable down tube assembly;
FIG. 50B is an exploded view of an embodiment of a folding system in accordance with the present disclosure shown in use with a foldable down tube assembly; and
FIG. 51 is a perspective view of an embodiment of a folding system in accordance with the present disclosure shown in use with a foldable down tube assembly shown in a folded position.

### DETAILED DESCRIPTION

In the following paragraphs, examples of the present invention will be described in detail by way of example with reference to the accompanying drawings, which are not drawn to scale, and the illustrated components are not necessarily drawn proportionately to one another. Throughout this description, the embodiments and examples shown should be considered as exemplars, rather than as limitations on the present invention. As used herein, the "present invention" refers to any one of the embodiments of the invention described herein, and any equivalents. Furthermore, reference to various aspects of the invention throughout this document does not mean that all claimed embodiments or methods must include the referenced aspects.

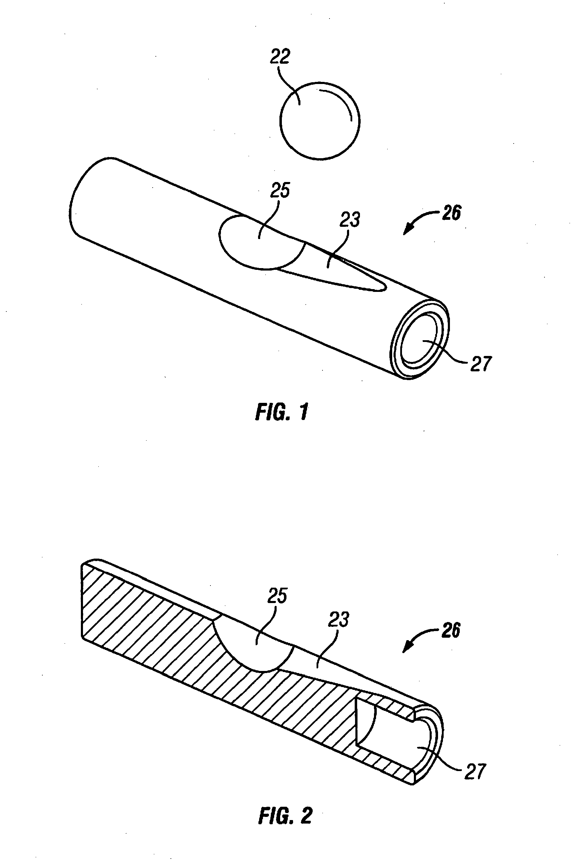

With reference to FIGS. 1-10, exemplary embodiments of a joint locking assembly comprise one or more button members 26, which are substantially rod-shaped members sized to be disposed within other joint components to facilitate folding and locking of mechanical components. As best seen in FIG. 1, button member 26 defines a recess 23, which may slope downward adjacent a rounded concave portion 25. It should be noted that the button recess may vary in it structure. As shown in FIG. 1, embodiments may slope downward to meet the concave portion 25 of the button member 26. Alternatively, as discussed with reference to other embodiments, the button recess is not sloped but is straight and of uniform depth. Rounded concave portion 25 is sized to receive at least a portion of bearing ball 22. Button member 26 further defines a short channel 27 at one end. The short channel 27 is sized to receive a biasing element such as a spring, or a portion thereof, which compresses when the user pushes the button member 26, as described in more detail below.

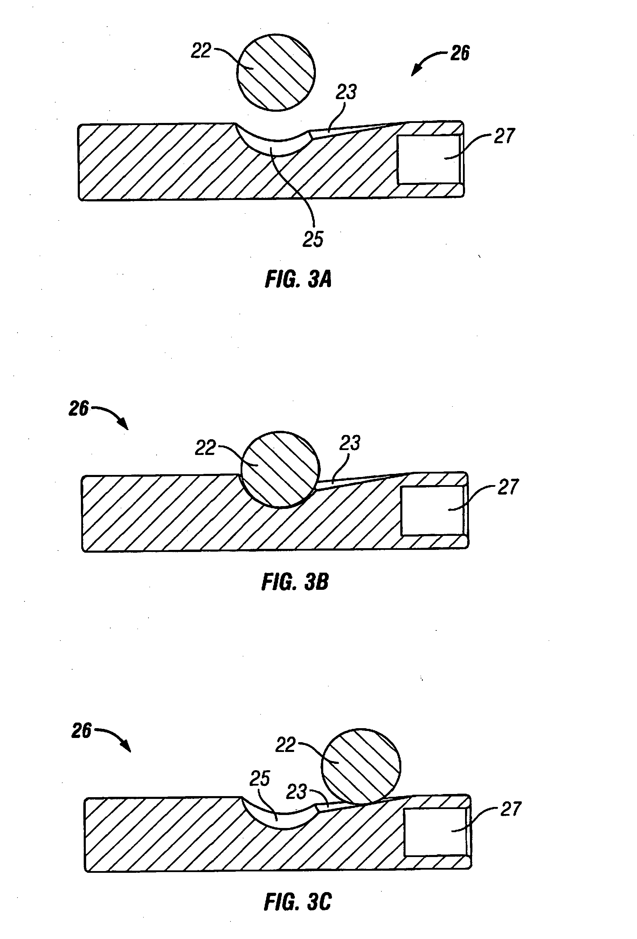

FIG. 3B shows an exemplary embodiment of a button member 26 in an unlocked configuration corresponding to a joint locking assembly being in an unlocked position. In the unlocked configuration, bearing ball 22 is positioned so it has substantial contact with the concave portion 25 of the button member 26. In the locked position bearing ball 22 is spaced from concave portion 25 and has substantial contact with recess 23 of the button member 26.

An exemplary embodiment of a joint locking assembly 10 includes one or more button members 26, a first body 12 and at least one second body 14 coupled to the first body 12.

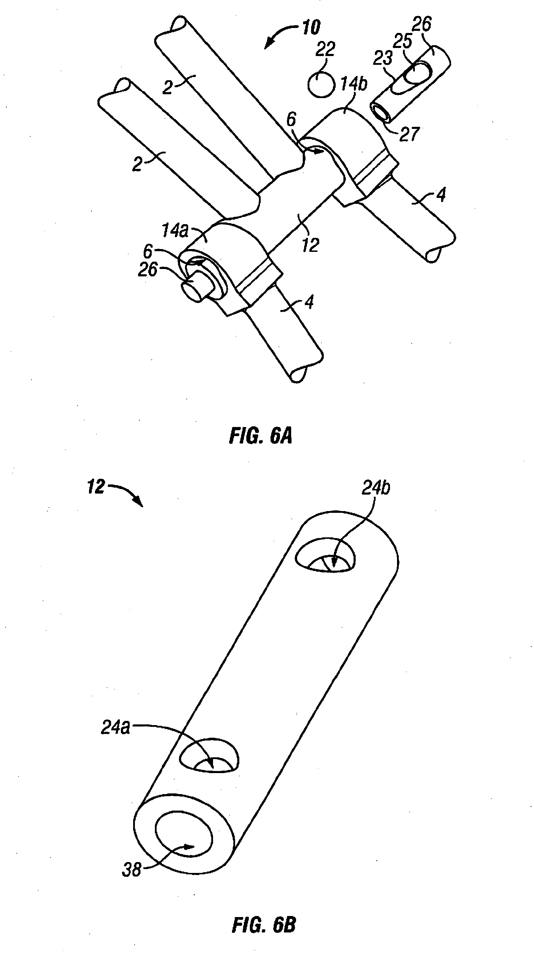

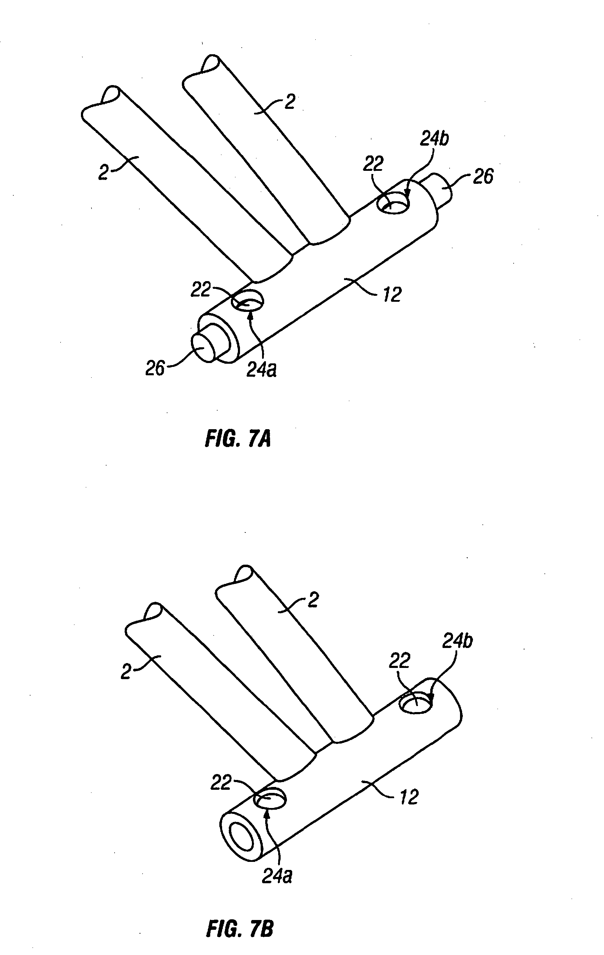

Bearing ball 22 is disposed between each second body 14a, 14b and the first body 12. As described in detail herein, the movement and relative location of bearing ball 22 moves the joint locking assembly between a locked and an unlocked position. First body 12 defines at least one bearing ball receiving space 24 sized to receive a portion of bearing ball 22. The bearing ball receiving space 24 may be of any shape or configuration suitable to receive at least a portion of the bearing ball 22 and may be an aperture or a concave recess. As best seen in FIGS. 6B, 7A and 7B, exemplary embodiments of a first body 12 define two apertures 24a, 24b to serve as bearing ball receiving spaces. First body 12 may be a substantially cylindrical member defining bearing ball receiving apertures 24a, 24b spaced apart at or near opposite ends of the first body 12. First body 12 defines a button receiving channel 38 extending therethrough and sized to accommodate two button members 26a, 26b and a biasing mechanism 29, such as a spring. The first body 12 may be coupled to a first component 2 of an apparatus to be folded, such as a portion of an outdoor umbrella shaft.

In exemplary embodiments, second bodies 14a, 14b are rotatably coupled to first body 12, with second body 14a coupled to a first end of first body 12 and second body 14b coupled to a second end of first body 12. Each second body 14a, 14b may define a through hole 15 sized to receive an end of first body 12. Exemplary embodiments of through hole 15 define a first concave recess 6 and a second concave recess 8. As described in more detail herein, first concave recess 6 receives a portion of bearing ball 22 when the joint locking assembly is locked in an unfolded position, and second concave recess 8 receives a portion of bearing ball 22 when the joint locking assembly is locked in a folded position. One or more of the second bodies 14a, 14b are fixedly attached or otherwise coupled to a second component 4 of an apparatus to be folded, such as a portion of an outdoor umbrella shaft.

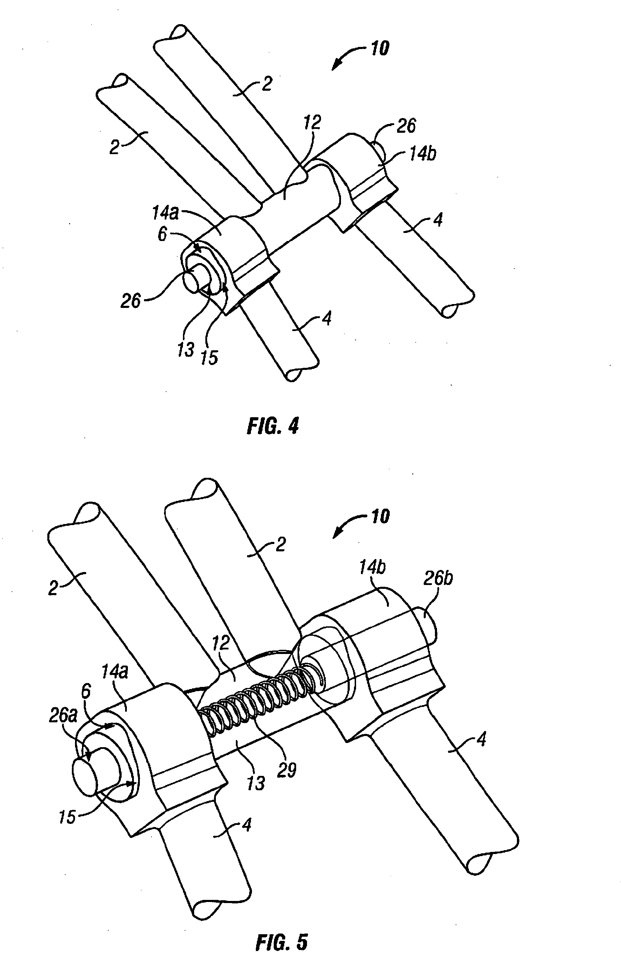

With reference to FIGS. 5 and 6A, it can be seen that each button member 26a, 26b and its associated bearing ball 22 are inserted within first body 12. More particularly, button member 26a is inserted into a first end 9 of first body 12 and disposed within button receiving channel 38 of the first body 12, and button member 26b is inserted into a second end 11 of first body 12 and disposed within the channel 38. As best seen in FIG. 5, a biasing element 29 is disposed within channel 38 of the first body 12 between the two button members 26a, 26b. The short channel 27 of each button member 26a, 26b receives a respective end portion of the biasing element 29.

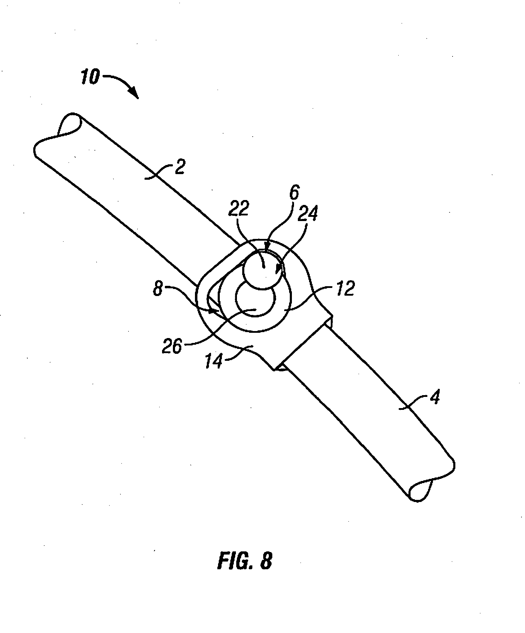

In operation, joint locking assembly 10 can be seen in FIG. 8 in a locked position with the components to be folded in an unfolded position. In the locked position, button member 26a, 26b and spring 29 are disposed within button receiving channel 38. Each bearing ball 22 is disposed between first body 12 and second body 14 and positioned so it contacts sloped recess 23 of each button member 26a, 26b and protrudes from each bearing ball receiving space 24, thereby having substantial contact with concave recess 21a of each second body 14a, 14b. Spring 29 biases the button members 26a, 26b to hold sloped recesses 23 of each button member 26a, 26b in position so the bearing balls 22 remain in substantial contact with concave recesses 24 of the second body 14a, 14b, thereby maintaining the joint locking assembly locked in an unfolded position.

As shown in FIGS. 4, 5 and 7A, an end of each button member protrudes from the channel 38. This exposure of the button ends provides the user with easy access for pressing the button members 26. To unlock the joint locking assembly 10 and fold the foldable components, the user presses the protruding ends of both button members 26. This action compresses the spring 29 and counteracts its outward bias so each button member slides further inward inside receiving channel 38. As the button members 26 slide inward, bearing ball is urged from its position contacting sloped recesses 23 of the button members to a position in rounded concave portions 25 of each button member 26. This movement of bearing ball 22 also urges it away from concave recesses 21a of the second body 12 so its contact with the first concave recesses 6a is reduced. As best seen in FIG. 7B, the bearing balls 22 thereby move downward further into receiving spaces 24a, 24b.

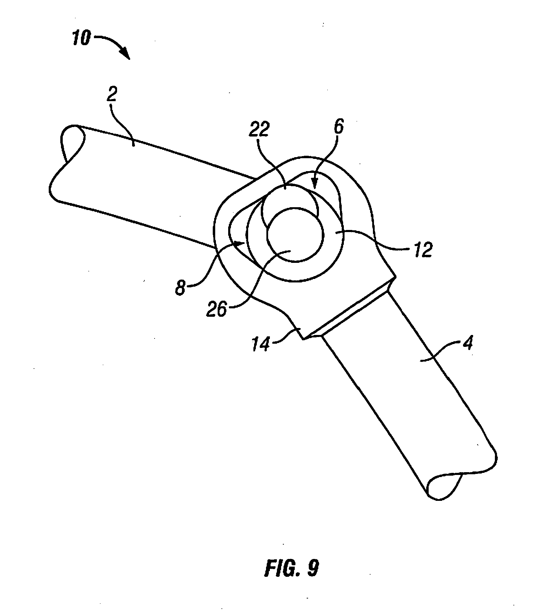

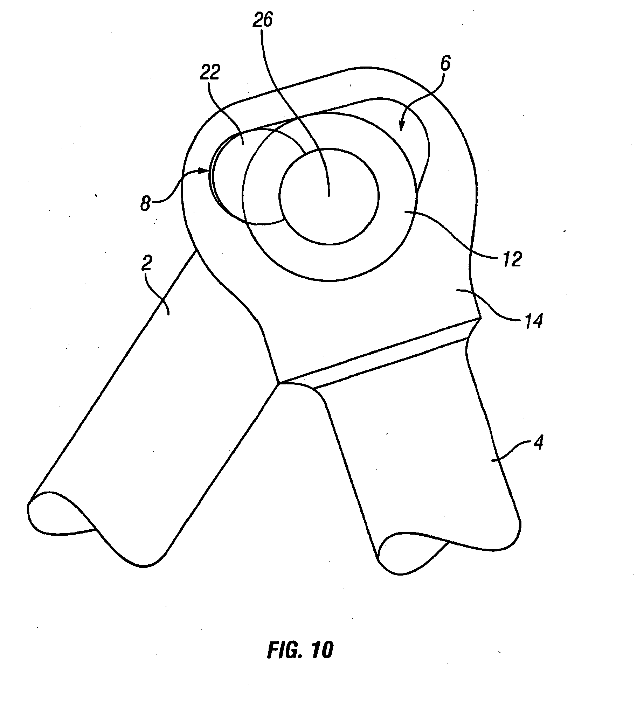

With bearing ball 22 having relatively less contact with concave recess 21a of the second body 14, the joint locking assembly 10 is in an unlocked position. As such, the second body is moveable and can be rotated along with the mobile portion of the component to be folded about the first body 12 toward a folded position. As shown in FIG. 9, the bearing balls 22 roll along the inside surface of through hole 15 of the second body 14 from the first concave recesses 6a, 6b to the second concave recesses 8a, 8b thereby facilitating the rotating movement. Once rotated into a folded position, best seen in FIG. 10, each bearing ball 22 moves upward, protrudes out of receiving spaces 24a, 24b and settles in a position such that it has substantial contact with the second concave recess 8 of second body 14. Once rotated into this folded position, spring 29 expands and button members 26 slide back out to their original position. This biases bearing ball 22 in contact with sloped recesses 23 of each button member 26 and in contact with second concave recess 8 to lock the joint locking assembly 10 and the components of the apparatus to be folded in the folded position.

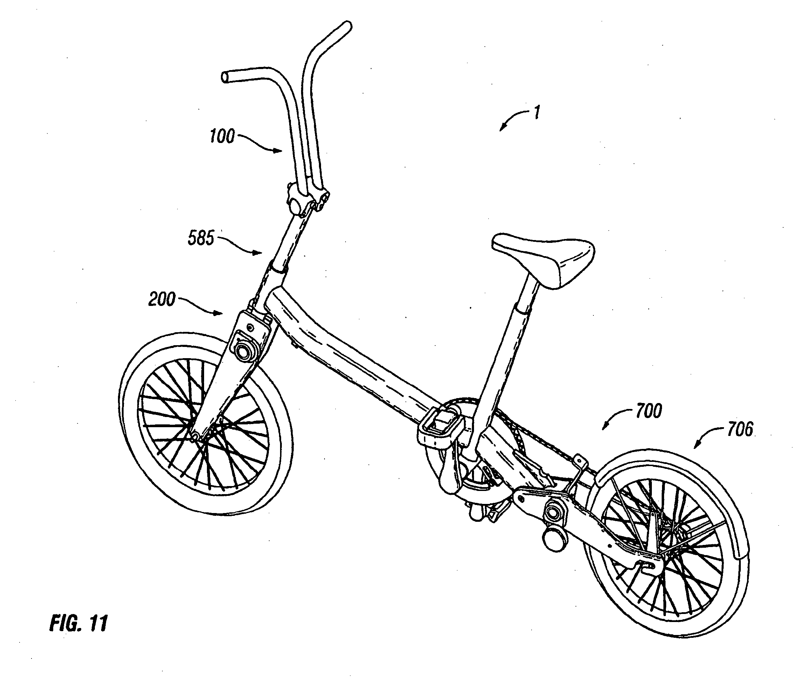

FIG. 11 shows a foldable bicycle 1 employing embodiments of joint locking assemblies in accordance with the present disclosure. An exemplary foldable bicycle 1 has a frame 575 including a frame tube 555, a seat tube 565, and a bearing tube 585. As shown, the joint locking assembly may be used in connection with a foldable handlebar assembly 100, 200 a foldable front fork assembly 300 and a foldable rear fork assembly 700 and rear wheel assembly 706.

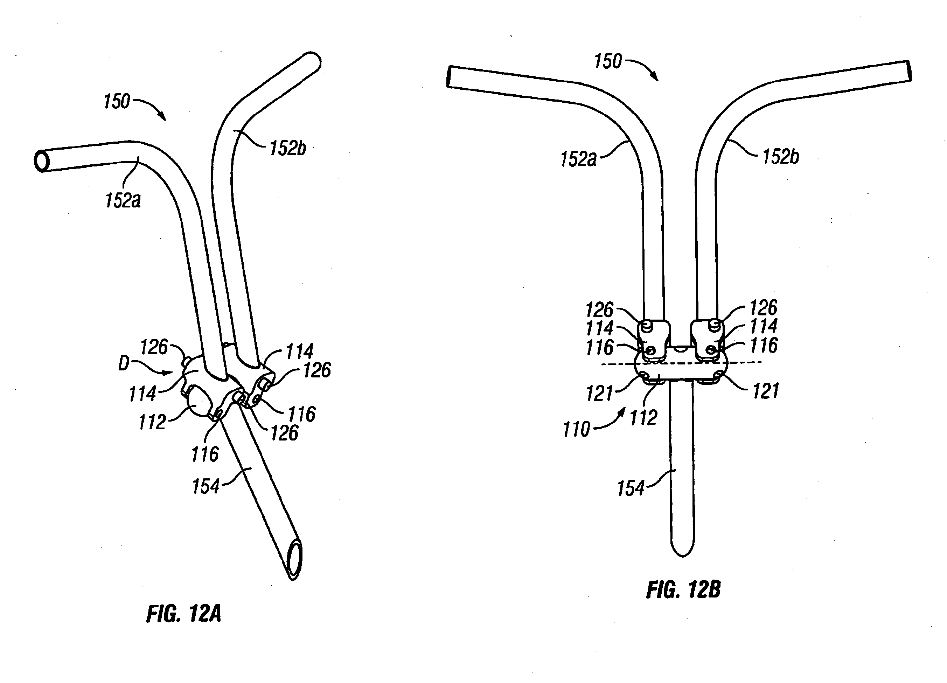

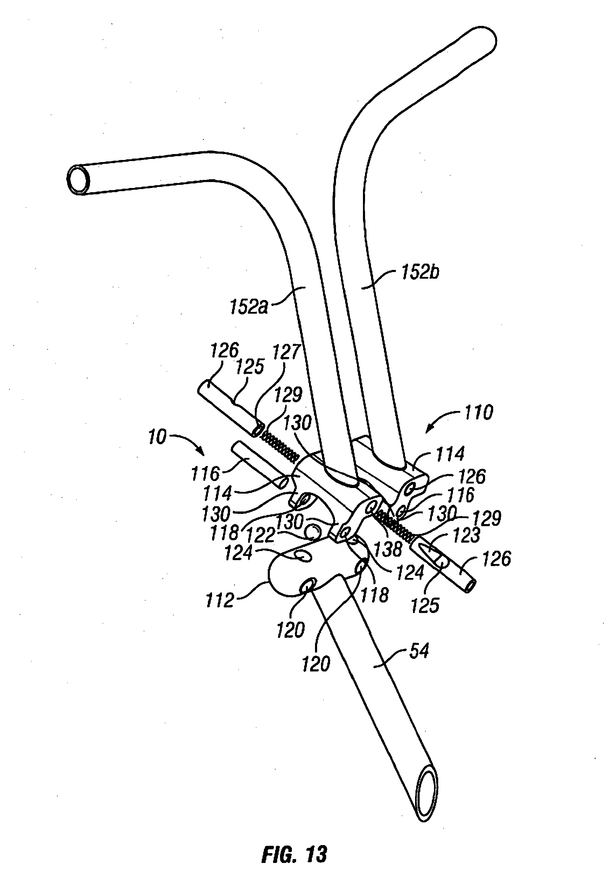

Referring to FIGS. 12A-19, an embodiment of a joint locking assembly will be described as used in connection with a foldable handlebar assembly. Foldable handlebar assembly 100 comprises two handlebars 152a, 152b, handlebar mounting member 154 and a joint locking assembly 110, which serves to connect the handlebars 152 to the mounting member 154 and facilitates folding of the handlebars 152. In exemplary embodiments of a foldable handlebar assembly, there are two rotatable bodies 114a and 114b, each coupled to a respective end of the stationary body 112. Axle 116 serves to mount each rotatable body onto stationary body 112 by being slidably inserted through receiving apertures 118 of each rotatable body 114a, 114b and channels 120 of the stationary body 112. Each rotatable body 114a, 114b is rotatable about a respective end of stationary body 112 via axle 116.

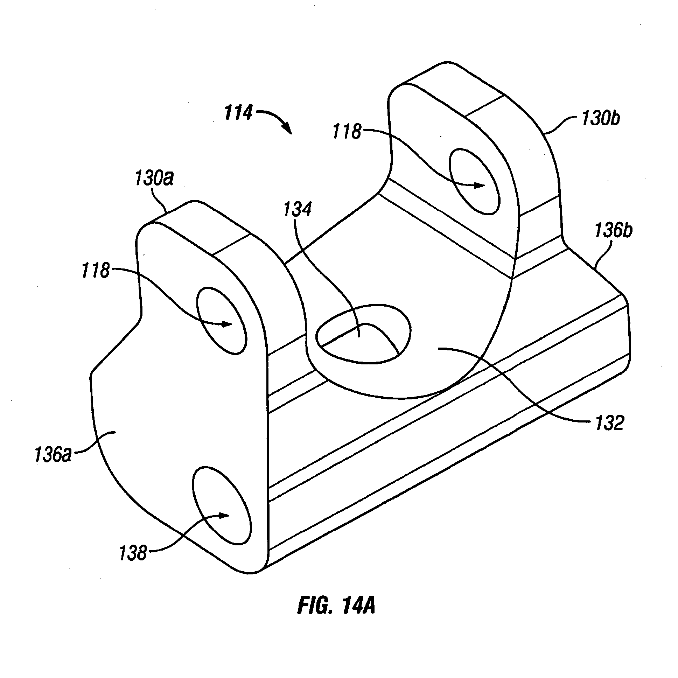

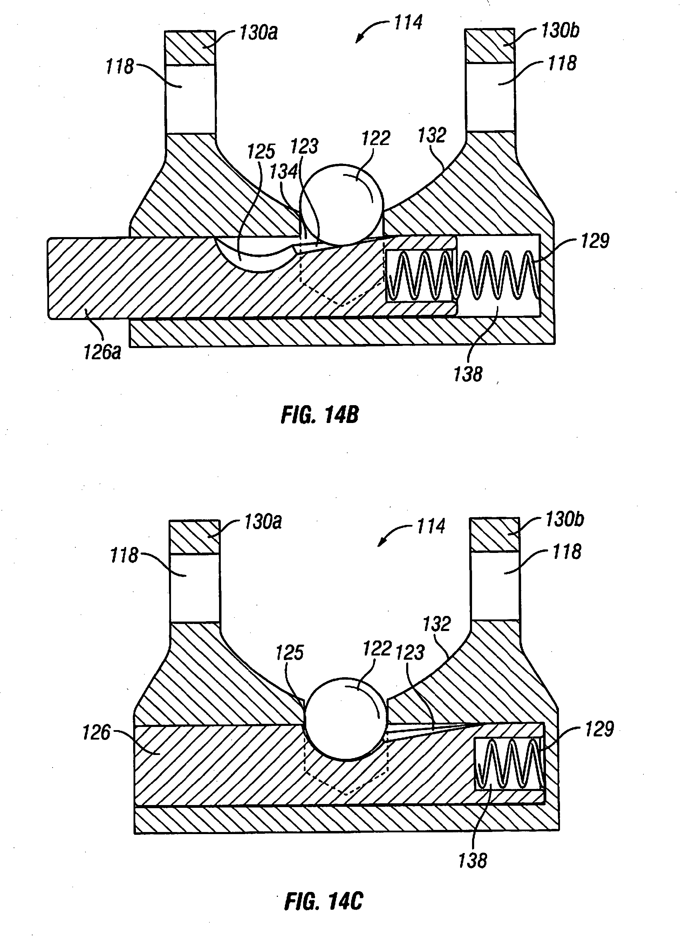

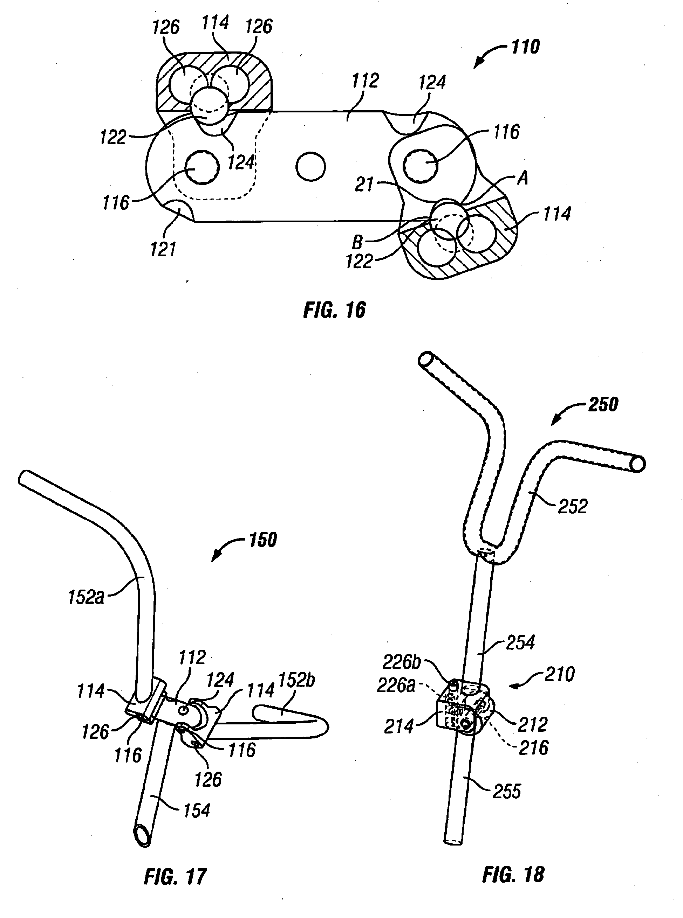

As shown in FIGS. 14A-14D, rotatable body 114 may be a substantially rectangular component having two extensions 130a, 130b on each end 136a, 136b. Each extension 130 defines a receiving aperture 118 sized to receive axle 116 and secure the rotatable body 114 to the stationary body 112. Each side 136a, 136b of rotatable body 114 defines a button receiving channel 138a, 138b (not shown), each of which receives a button member 126 and associated spring 129. As best seen in the cut away cross-section shown in FIGS. 14B-D and 16, button receiving channels 138 are defined in rotatable body 114 such that they are parallel to and adjacent each other and the inserted button members 126 are parallel to and adjacent each other. Rotatable body 114 defines a concave central portion 132 and a center hole 134. The center hole 134 is defined in rotatable body 14 such that it provides an access point for both button receiving channels 138a, 138b.

More particularly, bearing ball 122 is disposed in center hole 134 so that a portion of the bearing ball 122 contacts concave recess 124 of the stationary body 112 and a portion of the bearing ball contacts each of the two button members 126. When the joint locking assembly 110 is in the unlocked position bearing ball 122 contacts rounded concave portions 125 of the button members 126 and has limited contact with the concave recess 124 of stationary body 112. When the joint locking assembly 10 is in a locked position bearing ball 122 contacts recesses 123 of the button members 126 and has relatively more contact with the concave recess 124 of stationary body 112.

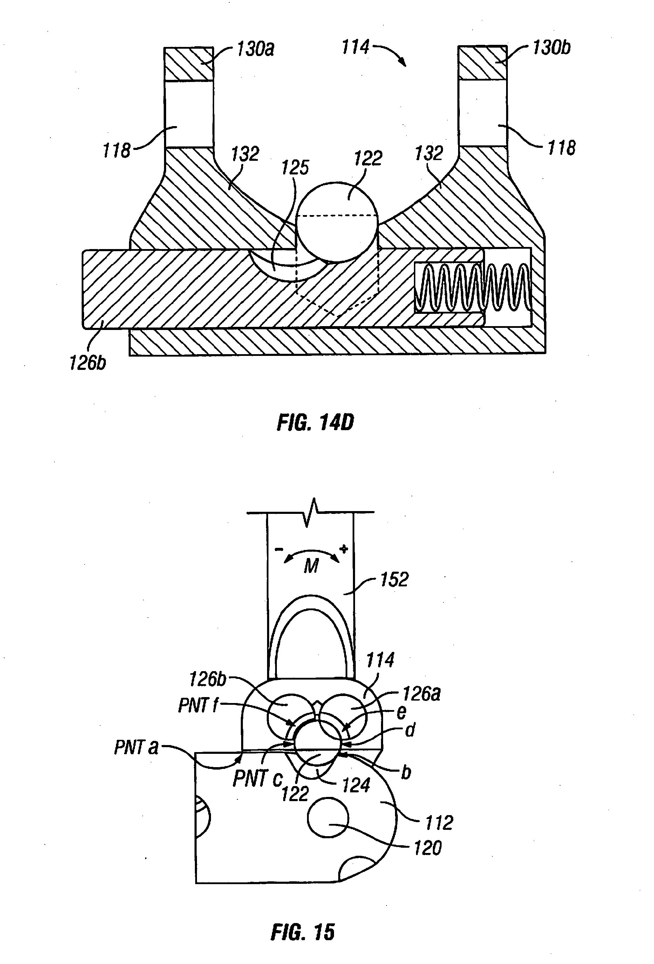

In exemplary embodiments, button members 126 of joint locking assembly 110 comprise one active button member 126a and one blind button member 126b. Active button member 126a defines a recess 123 that slopes while blind button member 126b has a horizontal recess 123 of uniform depth. This arrangement serves to prevent a gap during loading because blind button member 126b holds bearing ball 122 in the correct locked position so that the user has to push both buttons to initiate folding. FIGS. 14B and 14C show an embodiment of an active button member 126a, and FIG. 14D shows an embodiment of a blind button member 126b. As best seen in FIG. 15, the active button 126a pushes bearing ball 122 such that there is contact at point A between rotatable body 114 and stationary body 112, at point B between the bearing ball 122 and concave recess 124 of stationary body 112, at point C between bearing ball 122 and a first side of center hole 134 of the rotatable body 114, at point D between bearing ball 122 and a second side of center hole 134 of the rotatable body 114, at point E between bearing ball 122 and the recess 123 of the active button member 126a, and at point F between bearing ball 122 and the recess 123 of the blind button member 126b. These contacts ensure that the user does not feel any gap when loading handlebars 152.

Operation of the joint locking assembly 110 in connection with a foldable handlebar assembly 100 will now be described. When locking mechanism 110 is in a locked position, button members 126 and springs 129 are disposed within button receiving channels 138 with their ends protruding from the channels 138. Bearing ball 122 is disposed between stationary body 112 and rotatable body 114, which is rotatably coupled to the stationary body 112 by axle 116, as described above. As best seen in FIGS. 14B and 16, bearing ball 122 is positioned so it contacts the sloped recess 123 of each button member 126 and has substantial contact with a primary concave recess 124 or secondary concave recess 121 of stationary body 112. For instance, as shown in FIG. 16, for the folded handlebar in a locked position it can be seen that bearing ball 122 contacts secondary concave recess 121 at two points, A and B. Springs 129 bias the button members 126 to hold bearing ball 122 and sloped recesses 123 of each button member 126 in contact, thereby maintaining joint locking assembly 110 in a locked position.

To unlock the joint locking assembly 110 and fold the handlebars 152, the user presses the protruding ends of both button members 126 of a rotatable body 114. This action compresses the spring 129 associated with each button member 126 so each button member slides inward inside each respective button receiving channel 138a, 138b. As the button members 126 slide inward, bearing ball 122 is urged from its position contacting sloped recesses 123 of the button members 126 to a position in rounded concave portions 125. This movement of bearing ball 122 also urges the bearing ball 122 away from concave recess 124 of stationary body 112 so its contact with the concave recess 124 is reduced. With bearing ball 122 having relatively less contact with concave recess 124, joint locking assembly 110 is an unlocked position. As such, rotatable body 114 can be rotated around the end of stationary body 112 about axle 16 into a folded position. Bearing ball 122 rolls along the surface of stationary body 112, thereby facilitating the rotating movement. Once rotated into a folded position, springs 129 expand and button members 126 slide back out to their original position with ends protruding from button receiving channels 138. This biases bearing ball 122 in contact with sloped recesses 123 of each button member 126 and in contact with secondary concave recess 121 at two points, A and B such that the rotatable member 14 is locked in a folded position.

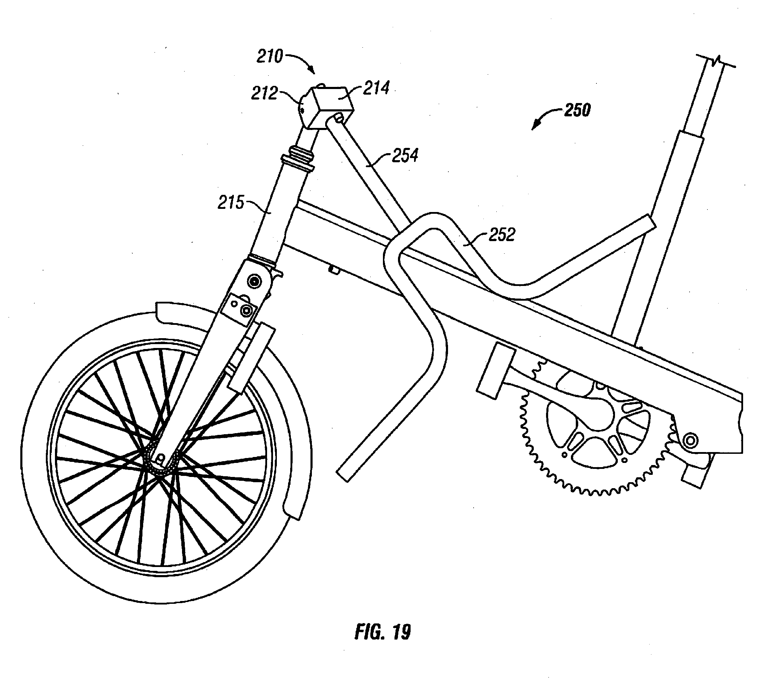

In another exemplary embodiment shown in FIGS. 18 and 19, joint locking assembly 210 is located such that it connects handlebar mounting member 254 to a bicycle steer tube 255, which together with handlebar member 252, forms a handlebar assembly 200. Joint locking assembly 210 comprises stationary body 212, rotatable body 214, axle 216, two substantially vertically oriented button members 226a, 226b and bearing ball 222. Each button member 226 defines a sloped recess 223, which slopes downward adjacent a rounded concave portion 225. Rounded concave portion 225 is sized to receive at least a portion of bearing ball 222. Stationary body 212 defines a recess 224 for receiving bearing ball 222. Operation of joint locking assembly 210 is substantially similar to the above-described joint locking assembly 110. The user presses button members 226, which slide inward inside rotatable body 214. This sliding movement urges bearing ball 222 into rounded concave portions 225 of the button members 226 and away from recess 224 of stationary body. Thus, rotatable body 214 is free to rotate and handlebar assembly 250 can be moved into a folded position.

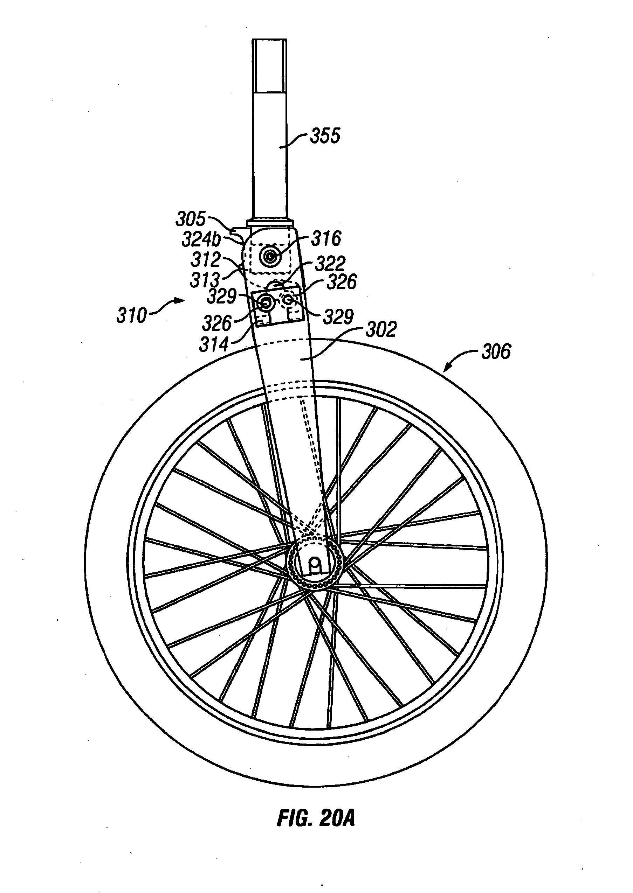

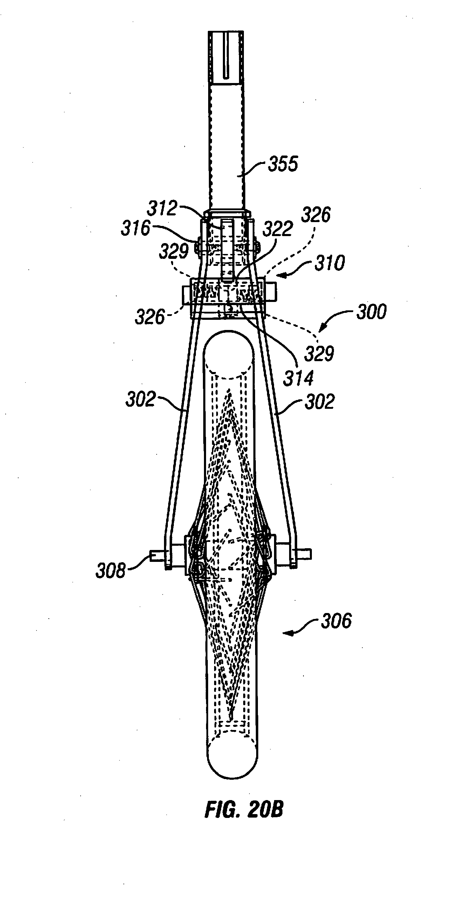

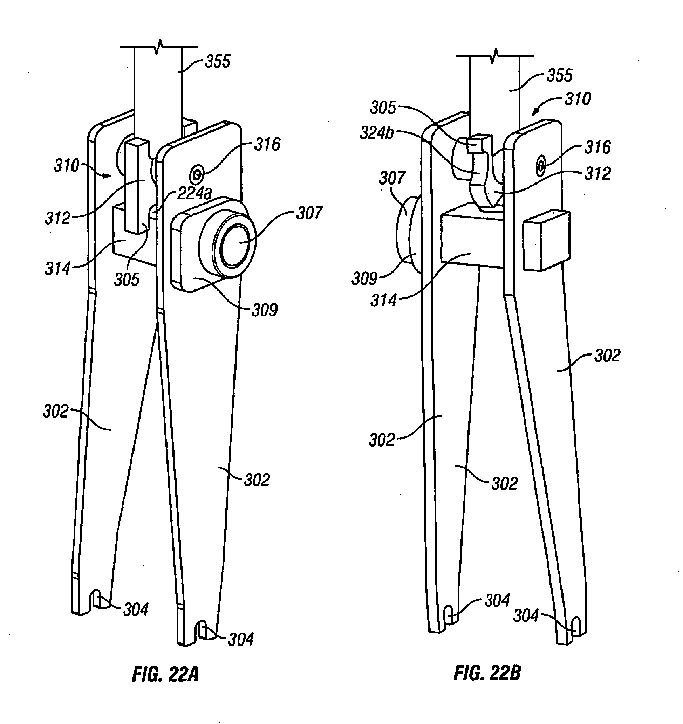

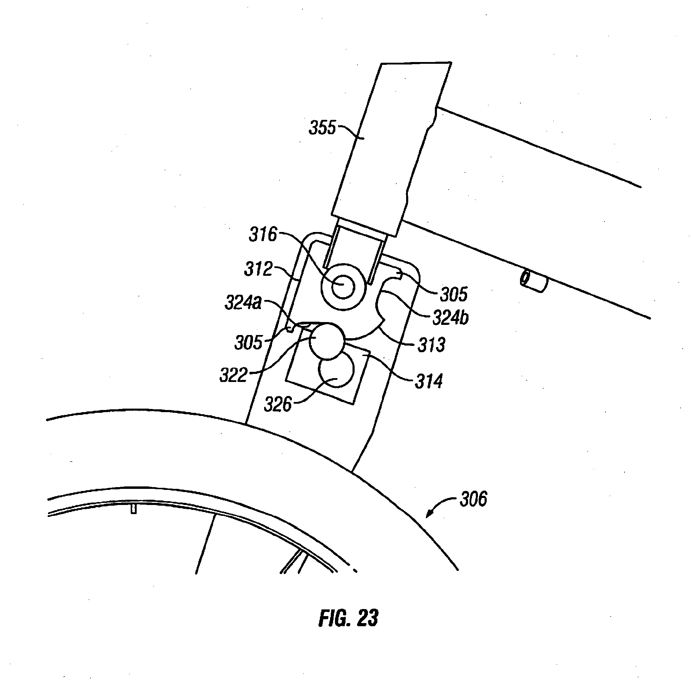

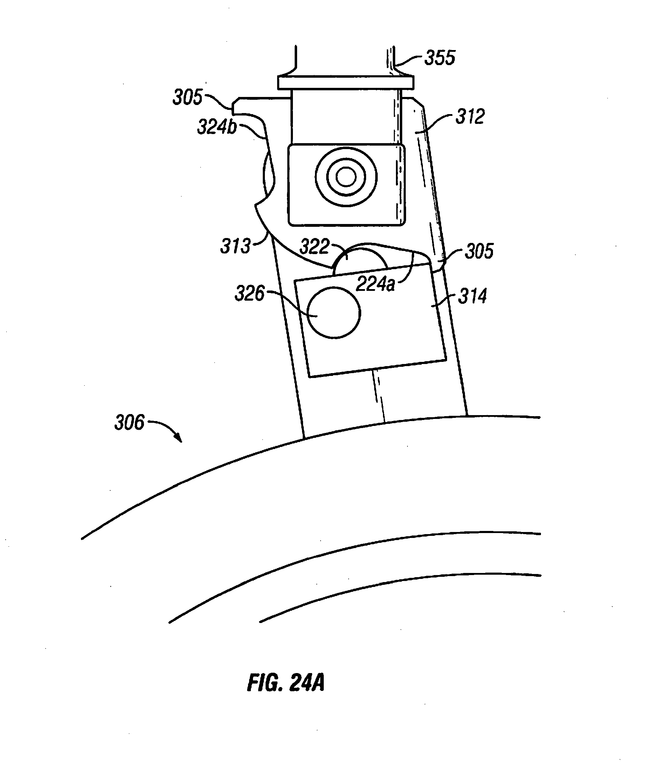

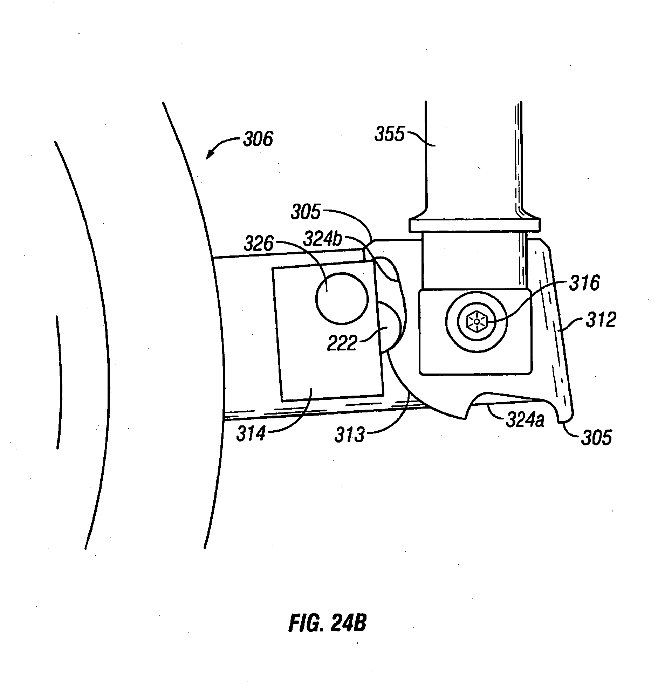

Turning to FIGS. 20A-24B, embodiments of a joint locking assembly used in a foldable front fork assembly for a bicycle will be described. Fork assembly 300 includes at least one fork member 302 and joint locking assembly 310. In a preferred embodiment, fork assembly 300 includes a pair of fork members 302 with the joint locking assembly 310 connecting the form members 302. Fork members 302 and rotatable body 314 of joint locking assembly 310 may be attached by welding, brazing or any other bonding method. Steer tube 355 is rotatably coupled to the fork members 302 via axle 316, which extends through apertures 318 defined in the top portions of fork members 302. Fork members 302 extend generally parallel to each other although they may be slightly angled relative to each other, as shown, if desired. The bottom of each fork member 302 defines a dropout 304 configured to be coupled to an adjacent front wheel assembly 306. Dropouts 304 are located at the bottom of fork members 302 and provide a structure for removably mounting front wheel assembly 306 to fork assembly 300. Dropouts 304 are configured to receive and to be coupled to respective ends of a wheel axle 308 that is part of front wheel assembly 306.

Joint locking assembly 310 comprises a stationary body 312, a rotatable body 314, a bearing ball 322 and two button members 326. In exemplary embodiments, stationary body 312 is a cam defining two recesses 324a, 324b for receiving a portion of bearing ball 322. As will be described herein, a first recess 324a receives a portion of bearing ball 322 when joint locking assembly 310 is in an unfolded or riding position, and second recess 324b receives a portion of bearing ball 322 when joint locking assembly 310 is in a folded position. A stop 305 at each end of cam 312 defines an edge of each recess 324 and provides the point of contact with rotatable body 314, as described in more detail herein. Stationary body 312 is either fixedly attached or integrally formed with bicycle steer tube 255, which is rotatably coupled to fork members 302 via axle 316. Each side of rotatable body 314 defines a button receiving channel 338, each of which receives a button member 326 and associated spring 329. Optionally, securing plate 309 secures button member 336 to the rotatable body 314.

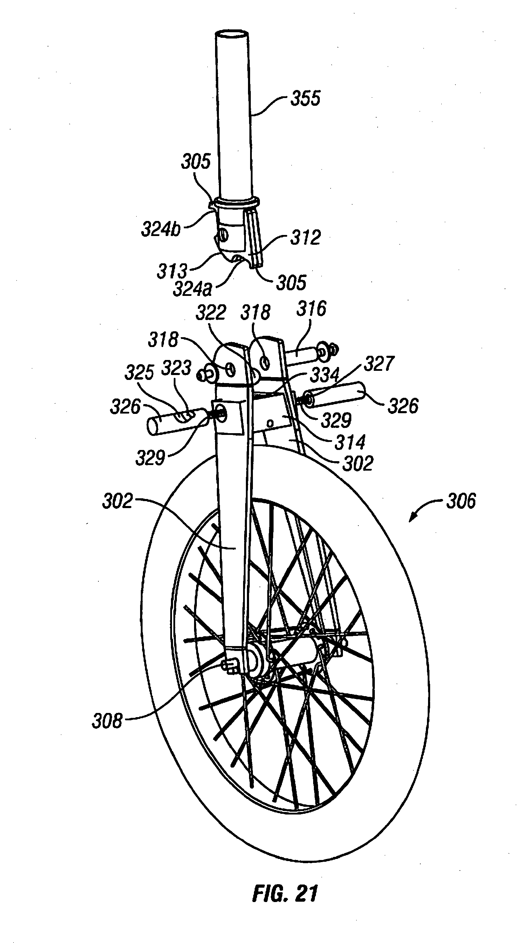

Each button member 326 is a substantially rod-shaped member sized to be disposed within receiving channel 338 of rotatable body 314. Embodiments may have one active button member and one blind button member, as discussed above. As best seen in FIG. 21, button member 326 defines a sloped recess 323, which slopes downward adjacent a rounded concave portion 325. Rounded concave portion 325 is sized to receive at least a portion of bearing ball 322. Button member 326 further defines a short channel 327 at one end. The short channel 327 is sized to receive a portion of a spring 329, which compresses when the user pushes the button member 326, as described in more detail below. Rotatable body 314 defines a center hole 334 in its top surface so a that a portion of bearing ball 322 rests in the center hole 334 and another portion of bearing ball 322 contacts one of the concave recesses 324 of cam 312. When joint locking assembly 310 is in a locked position bearing ball 322 contacts sloped recesses 323 of the button members 326 and has substantial contact with one of the concave recesses 324 of cam 312. When joint locking assembly 310 is in the unlocked position bearing ball 322 contacts rounded concave portions 325 of the button members 326 and has relatively less contact with a concave recess 324 of cam 312.

In operation, the user presses buttons 307 to initiate the process of folding foldable fork assembly 300. This action compresses spring 329 associated with each button member 326 so each button member slides inward inside each respective button receiving channel 338a, 338b. As the button members 326 slide inward, bearing ball 322 is urged from its position contacting sloped recesses 323 of the button members to a position in rounded concave portions 325. This movement of bearing ball 322 also urges the bearing ball 322 away from the first concave recess 324a of cam 312. With bearing ball 322 at least partially removed from first concave recess 324a, joint locking assembly 310 is an unlocked position. As such, rotatable body 314 can be rotated around the end of stationary body 312 about axle 316 into a folded position.

The user can effect this folding by grasping one or both of fork members 302 or wheel assembly 306. Bearing ball 322 rolls along the cam surface 313 of cam 312, thereby facilitating the rotating movement of rotatable body 314. Once rotated into a folded position, bearing ball rolls into second recess 324b of cam 312 so the joint locking assembly 310 is locked again. Springs 329 expand and button members 326 slide back out to their original position, thereby biasing bearing ball 322 in contact with sloped recesses 323 of each button member 326 and in second recess 324b of cam 312. To unfold foldable front fork assembly 300 and front wheel assembly 306, the user simply presses buttons 307 to initiate the unfolding process. The process operates essentially as described above except that rotatable body 314 moves in the opposite direction so bearing ball 322 moves from the second recess 324b of cam 312 back to the first recess 324a of cam 312.

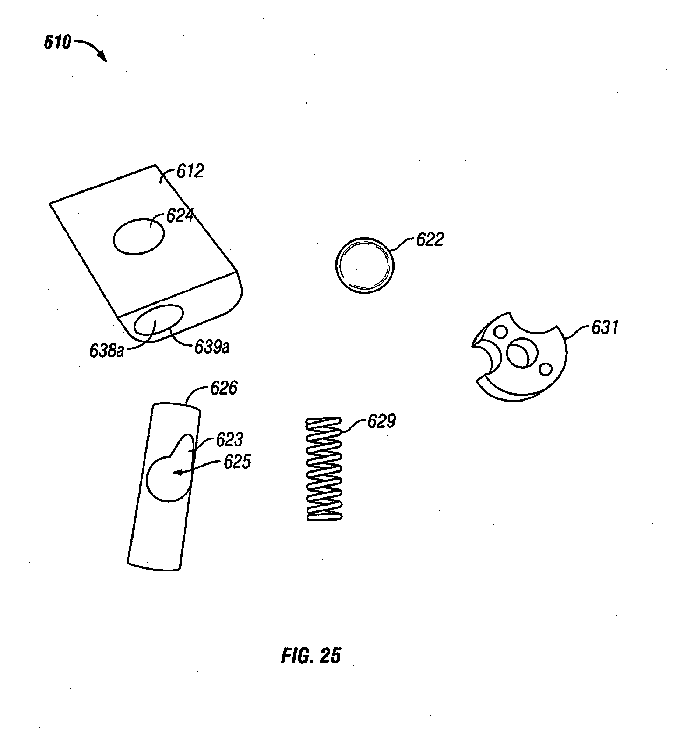

In exemplary embodiments of a locking assembly 610, the components, shown in FIG. 25 include a housing 612, a bearing ball 622, a button member 626, a biasing element 629, and optionally, a camming member 631. Button member 626 defines a recess 623, which may slope downward adjacent a rounded concave portion 625. As shown in FIG. 25, embodiments of recess 623 slope downward to meet the concave portion 625 of button member 626. It should be noted that the button recess 623 could be of other configurations, such as straight and having unifrom depth. Rounded concave portion 625 is sized to receive at a portion of bearing ball 622.

Housing 612 defines a channel 638a for receiving button member 626. The channel 638a extends through the housing and is sized to accommodate button member 626 and a biasing mechanism 629, such as a spring. The channel opening 639a is defined in a first side of the housing 612. A second channel 638b is defined in housing 612 with a channel opening (not shown) on the opposite side of the housing 612. The second channel 638b extends through the housing 612 and is sized to accommodate button member 626 and a biasing mechanism 629. Housing 612 also defines a bearing ball receiving aperture 624 sized to receive a portion of bearing ball 622. In exemplary embodiments, bearing ball receiving aperture 624 opens into and connects with channels 638a and 638b. Thus, when bearing ball 622 is disposed in the bearing ball receiving aperture 624 and button members 626 are disposed in the channels 638a and 638b, the bearing ball 622 is in contact with the button members 626.

In operation, button members 626 and spring 629 are disposed within button receiving channels 638 in a locked position. Bearing ball 622 is disposed in the bearing ball receiving aperture 624 and positioned so it contacts sloped recess 623 of button members 626. Spring 629 biases the button members 626 to hold sloped recesses 623 of each button member 626a, 26b in position so the bearing ball 622 remains elevated, thereby maintaining the joint locking assembly locked in an unfolded position when used in embodiments of locking system described herein.

To unlock the locking assembly 610, the user presses the protruding ends of button members 626. This action compresses the spring 629 and counteracts its outward bias so each button member slides further inward inside receiving channel 638. As the button members 626 slide inward, bearing ball 622 is urged from its position contacting sloped recesses 623 of the button members to a position in rounded concave portions 625 of each button member 626. This movement of bearing ball 622 also urges it downward into an unlocked position.

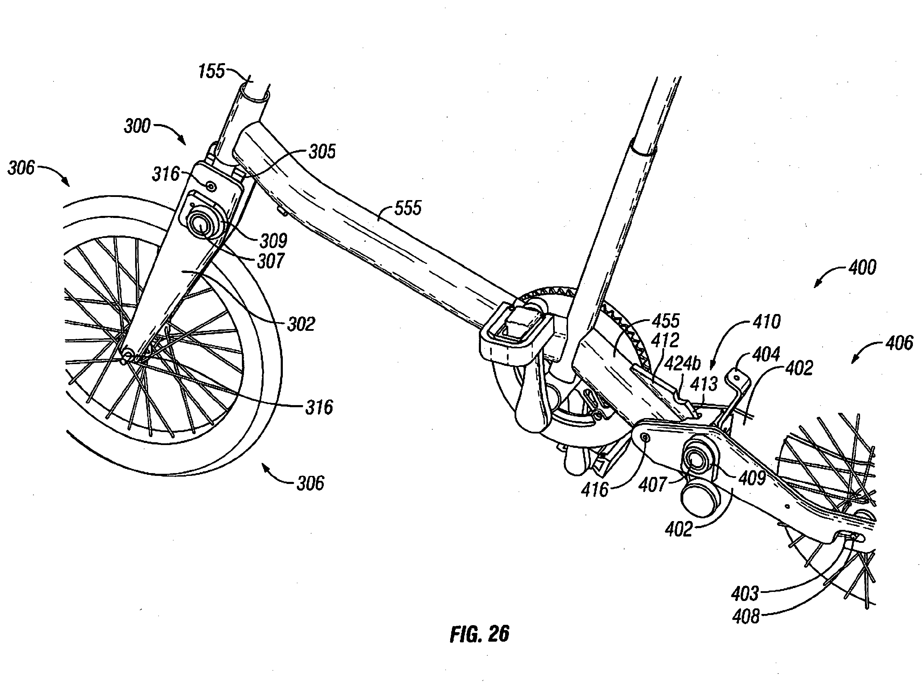

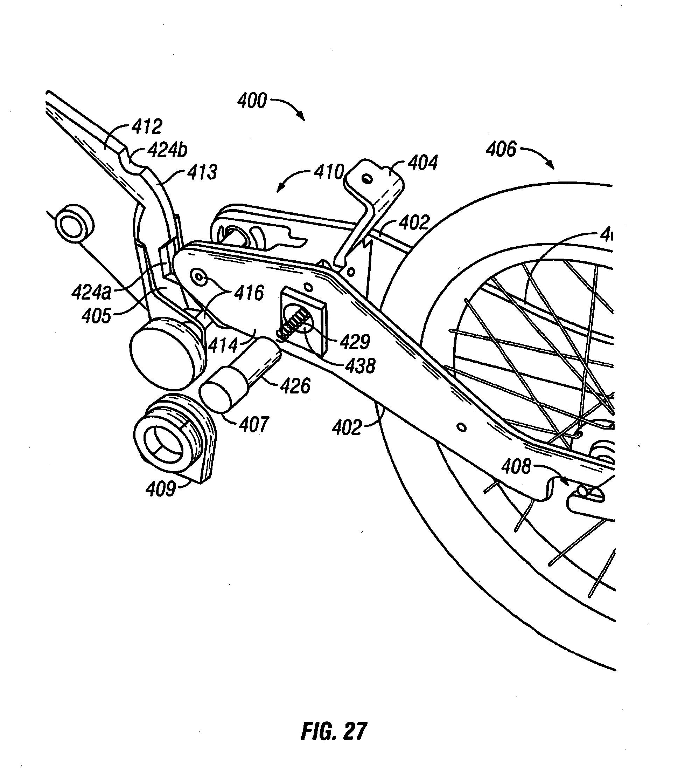

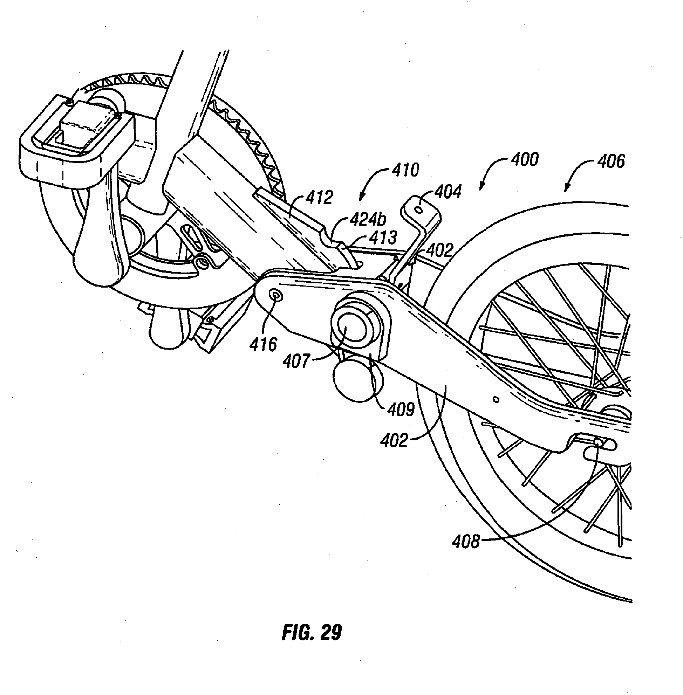

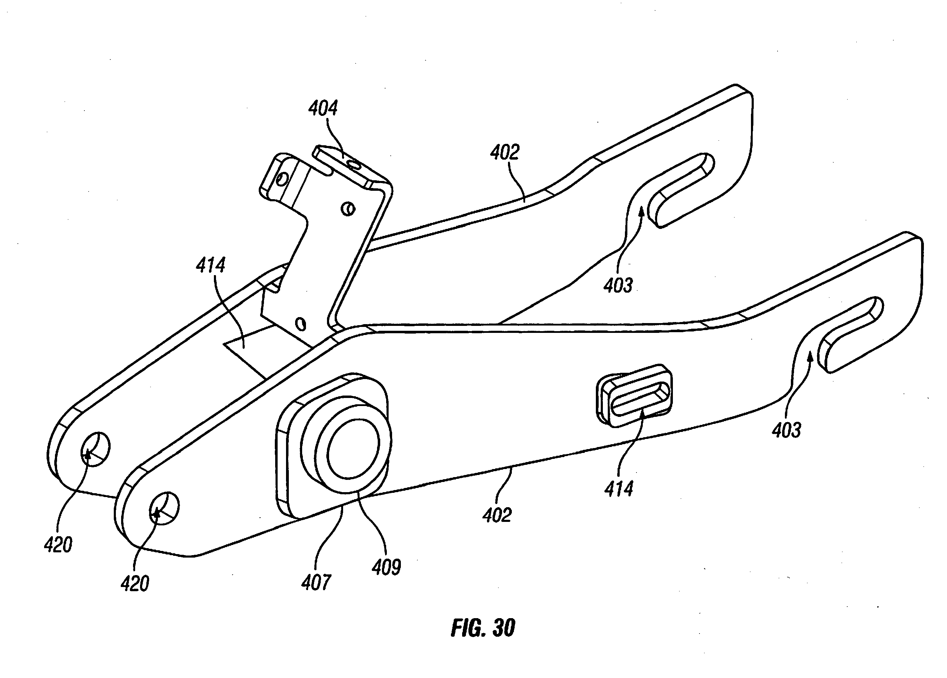

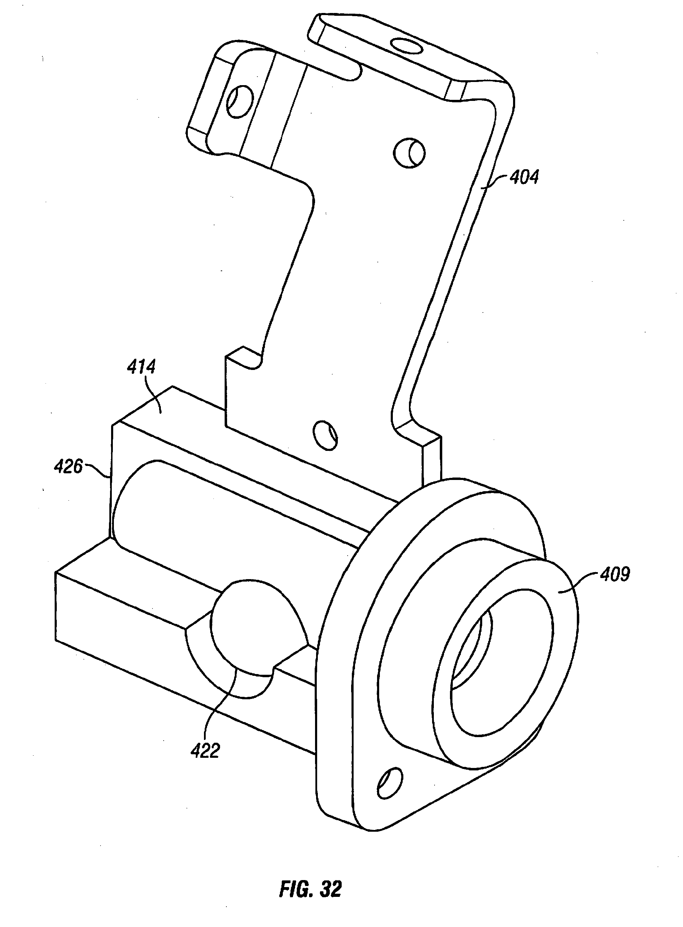

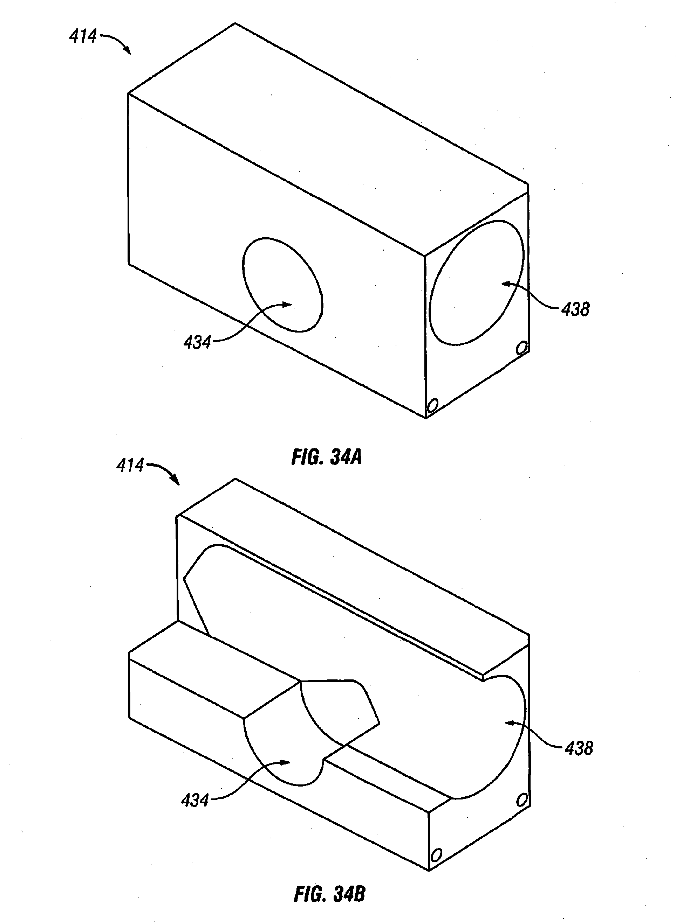

Embodiments, of a folding system used in conjunction with a foldable rear fork assembly can be seen in FIGS. 26-35B. Foldable rear fork assembly 400 comprises rear wheel assembly 406 and folding system 410. The rear fork assembly 400 includes two rear forks 402 and coupler 404 fixedly attached by welding, brazing or any other bonding method. The distal end of each rear fork member 402 defines a dropout 403 configured to be coupled to an adjacent rear wheel assembly 406. Dropouts 403 are located at the distal end of rear fork members 402 and provide a structure for removably mounting rear wheel assembly 406 to rear fork assembly 400. Dropouts 403 are configured to receive and to be coupled to respective ends of a rear wheel axle 408 that is part of rear wheel assembly 406. The proximal end of each rear fork member defines an aperture 420 to receive rear axle 416. One or more of the fork members 402 may comprise a coaster brake fixation point 441 for attachment of a rear brake.

Joint locking assembly 410 comprises a stationary body 412, a rotatable body 414, a bearing ball 422 and at least one button member 426. In exemplary embodiments, stationary body 412 is a cam defining two recesses 424a, 424b for receiving a portion of bearing ball 422. As will be described herein, a first recess 424a receives a portion of bearing ball 422 when joint locking assembly 410 is in an unfolded or riding position, and second recess 424b receives a portion of bearing ball 422 when joint locking assembly 410 is in a folded position. A stop 405 at a first end of cam 412 defines an edge of first recess 424a. Stationary body 412 is either fixedly attached or integrally formed with bicycle rear down tube 455, which is rotatably coupled to rear fork members 402 via axle 416. At least one side of rotatable body 414 defines a button receiving channel 438, which receives a button member 426 and associated spring 429.

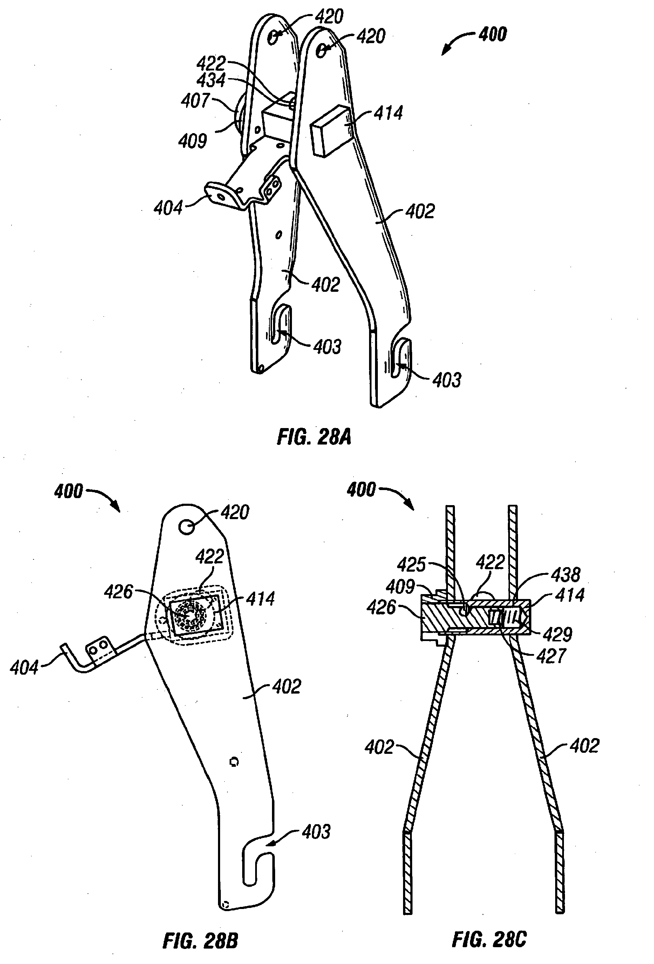

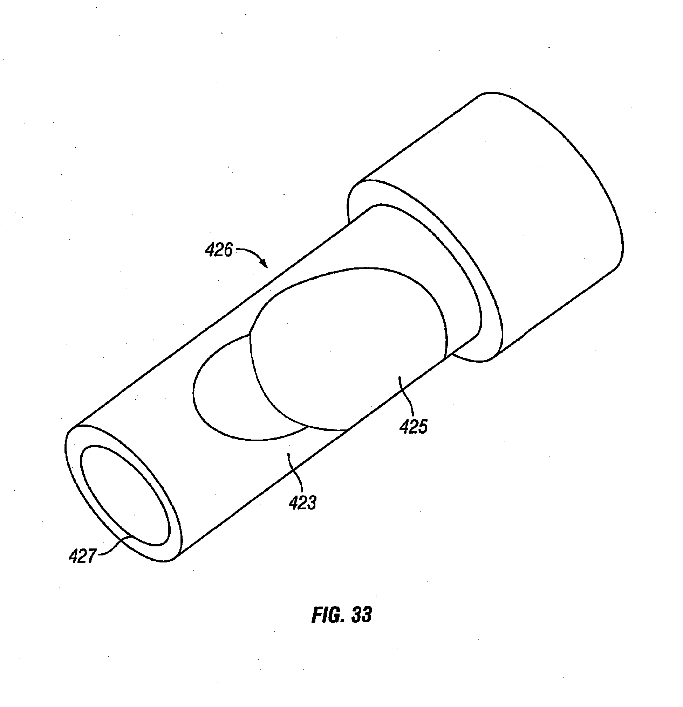

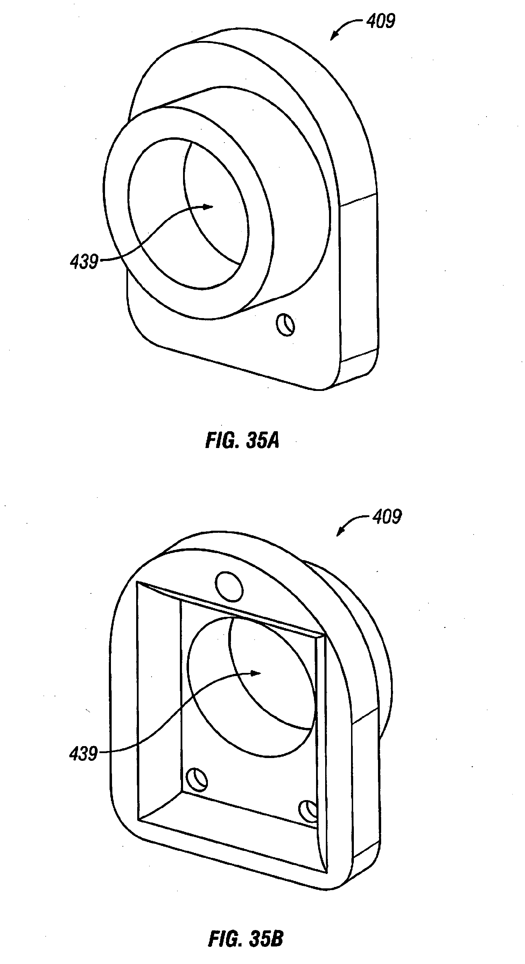

The button member 426 is a substantially rod-shaped member sized to be disposed within receiving channel 438 of rotatable body 414. Optionally, support plate 409 (FIGS. 35A-35B) defining apertures 439 for button member 426, secures button member 426 to the rotatable body 414. As best seen in FIG. 28C, button member 426 may be a blind button that defines a concave portion 425. Concave portion 425 is sized to receive at least a portion of bearing ball 422. Exemplary embodiments, as shown in FIG. 33, may have a horizontal recess 423 adjacent concave portion 325. Any gap will be eaten by a small rotation of the rear fork upward. Button member 426 further defines a short channel 427 at one end. The short channel 427 is sized to receive a portion of a spring 429, which compresses when the user pushes the button member 426, as described in more detail below.

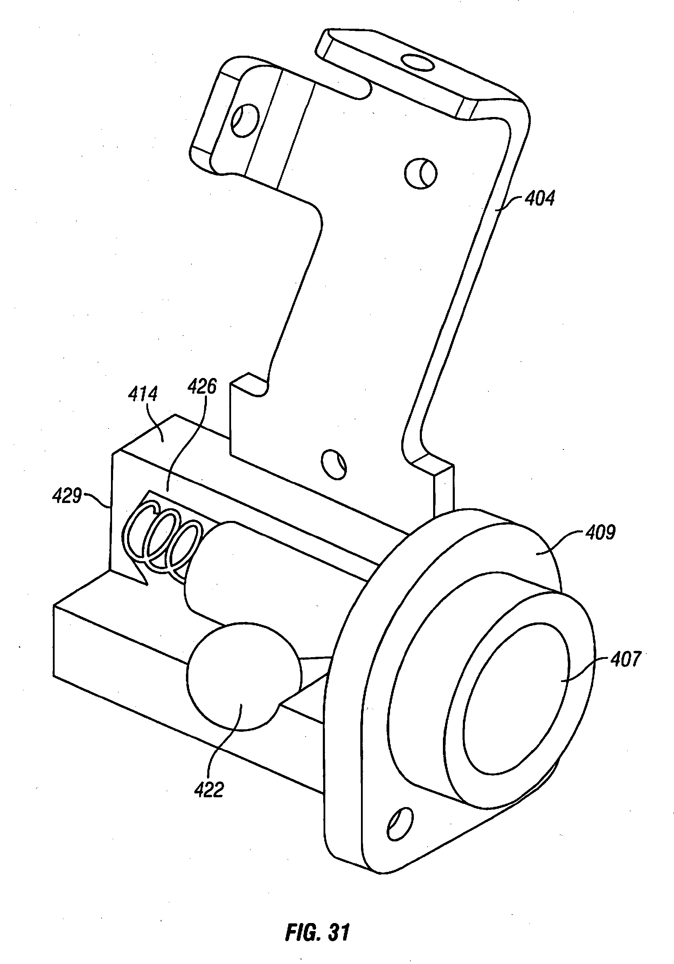

As seen in FIGS. 31, 32 and 34A-34B, rotatable body 414 defines a center hole 434 so that a portion of bearing ball 422 rests in the center hole 434 and another portion of bearing ball 422 contacts one of the concave recesses 424 of cam 412. When folding system 410 is in a locked position bearing ball 422 has no contact with recess 425 of button members 426 and has relatively substantial contact with one of the concave recesses 424a of cam 412. When joint locking assembly 410 is in the unlocked position bearing ball 422 contacts recess 425 of the button member 426 and has relatively less contact with the first concave recess 424a of cam 412.

In operation, the user presses button 407 to initiate the process of folding rear fork assembly 400. This action compresses spring 429 associated with button member 426 so button member slides inward inside button receiving channel 438. As the button member 426 slides inward, bearing ball 422 is urged from its locked position in contact with recess 423 and having no contact with concave portion 425 of button member 426 to a position in contact with concave portion 425 of button member 426. This movement of bearing ball 422 also urges the bearing ball 422 away from the first concave recess 424a of cam 412. With bearing ball 422 at least partially removed from first concave recess 424a, folding system 410 is an unlocked position. As such, rotatable body 414 can be rotated around the end of stationary body 412 about axle 416 into a folded position.

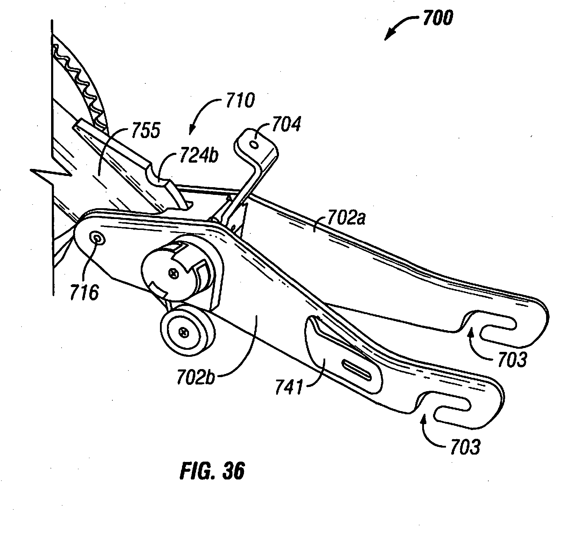

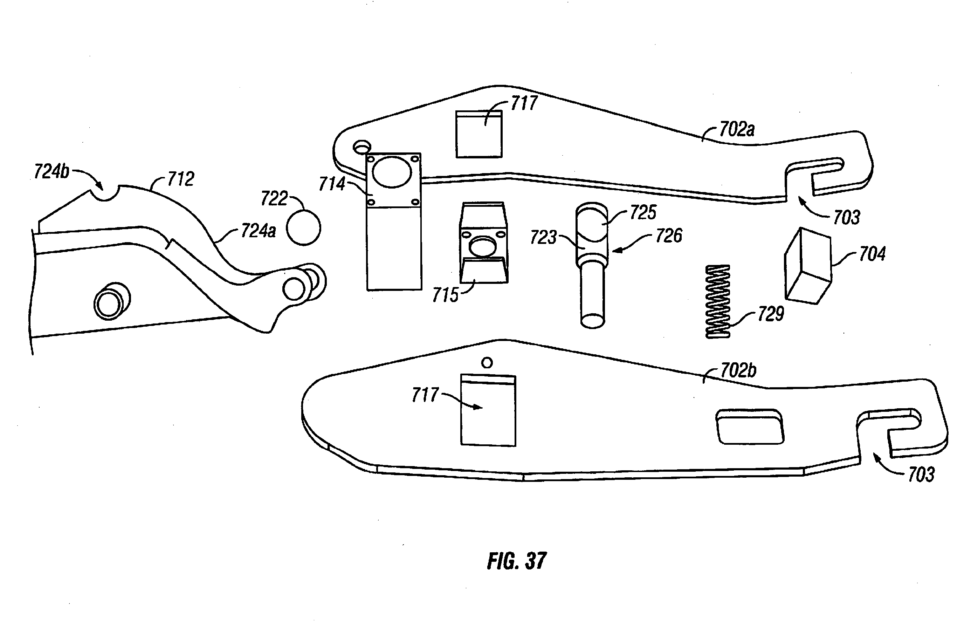

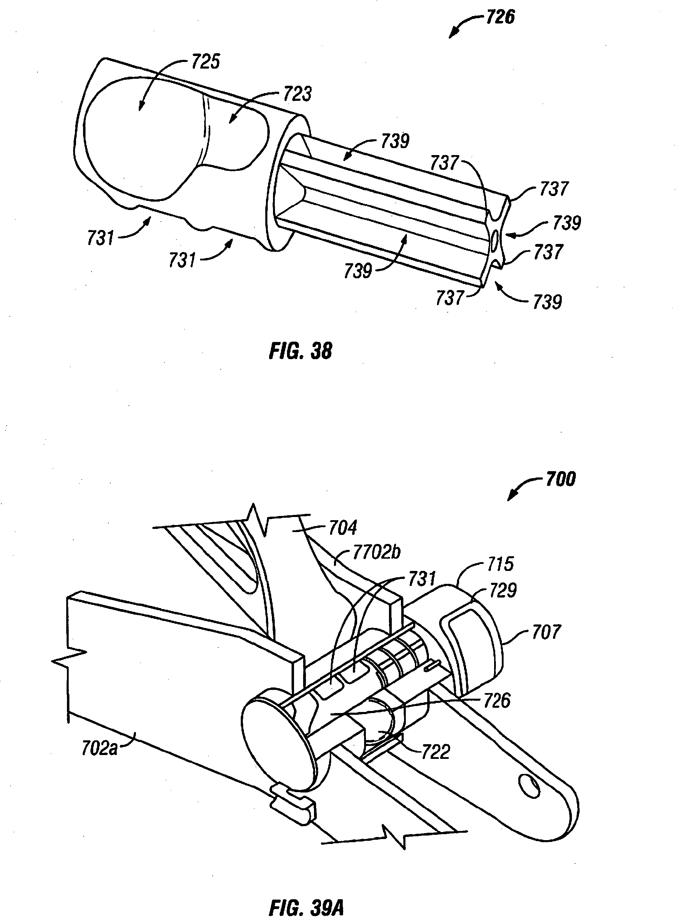

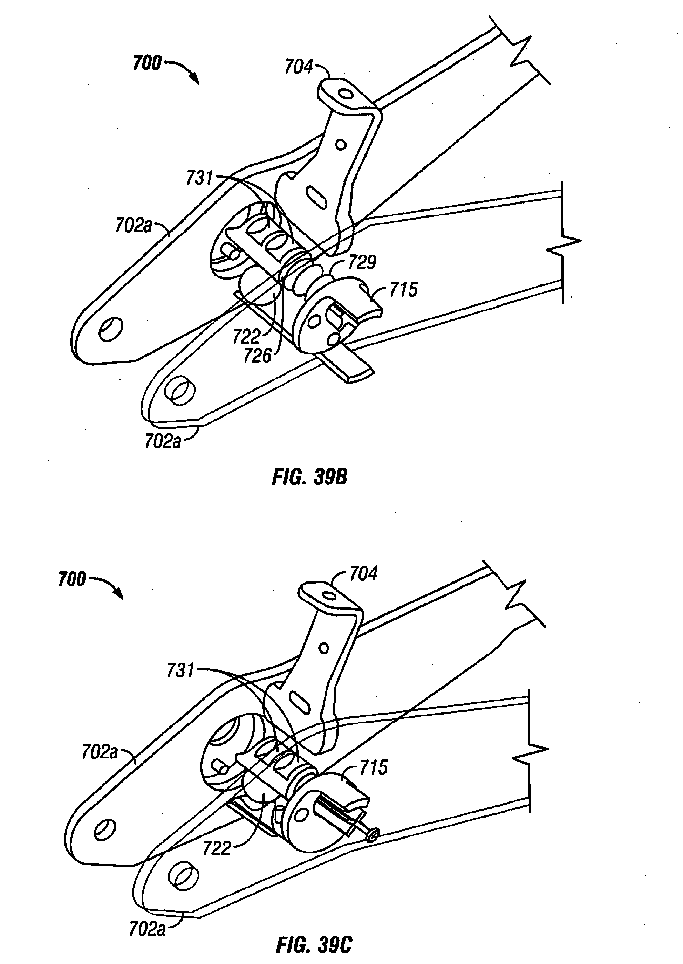

The user can effect this folding by grasping one or both of rear fork members 402 or rear wheel assembly 406. Coupler 404 provides an additional means to effect folding of rear fork assembly 400. Bearing ball 422 rolls along the cam surface 413 of cam 412, thereby facilitating the rotating movement of rotatable body 414. Once rotated into a folded position, bearing ball 422 rolls into second recess 424b of cam 412 so the joint locking assembly 410 is locked again. Springs 429 expand and button member 426 slides back out to its original position, thereby biasing bearing ball 422 in contact with second recess 424b of cam 412. To unfold foldable rear fork assembly 400 and rear wheel assembly 406, the user simply presses button 407 to initiate the unfolding process. The process operates essentially as described above except that rotatable body 414 moves in the opposite direction so bearing ball 422 moves from the second recess 424b of cam 412 back to the first recess 424a of cam 412. In exemplary embodiments of a folding system, illustrated in FIGS. 36-39C, a rotatable body 714 consists of a housing configured to mate with fork plates 702a, 702b and a housing cover 715, which may be attached to the housing 714. Housing 714 and housing cover 715 may be formed in any number of shapes, including a substantially rectangular block, as shown in FIG. 37 or a substantially cylindrical member, as shown in FIGS. 36 and 38-39C. A button 707 is, in turn, attached to the housing cover 715 and, as described in more detail herein, may be pressed in to unlock the locking assembly 710. The locking assembly further includes a bearing ball 722, a compression spring 729, and a button member 726, which may be a "blind" button member. The blind button member 726 defines a concave portion 725 sized to receive at least a portion of bearing ball 722. Exemplary embodiments of a blind button member 726 may have a horizontal recess 723 adjacent concave portion 725.

Foldable rear fork assembly 700 comprises rear wheel assembly 706 and folding system 710. The rear fork assembly 700 includes two rear fork plates 702a, 702b and coupler 704 fixedly attached by welding, brazing or any other bonding method. The distal end of each rear fork member 702a, 702b defines a dropout 703 configured to be coupled to an adjacent rear wheel assembly 706. The proximal end of each rear fork member defines an aperture 420 to receive rear axle 416. One or more of the fork members 402 may comprise a coaster brake fixation point 741 for attachment of a rear brake.

The rotatable body 714 of the folding system 710 is disposed in apertures 717 defined in the right and left fork plates 702a, 702b. The apertures 717 can be any shape so long as they are sized to accommodate rotatable body 714. In exemplary embodiments, stationary body 712 is a cam defining two recesses 724a, 724b for receiving a portion of bearing ball 722. As will be described herein, a first recess 724a receives a portion of bearing ball 722 when joint locking assembly 710 is in an unfolded or riding position, and second recess 724b receives a portion of bearing ball 722 when joint locking assembly 710 is in a folded position. A stop 705 at a first end of cam 712 defines an edge of first recess 724a. Stationary body 712 is either fixedly attached or integrally formed with bicycle frame tube 755, which is rotatably coupled to rear fork plates 702 via axle 716. At least one side of rotatable body 714 defines a button receiving channel 738, which receives a button member 726 and associated spring 729. As best seen in FIG. 38, an exemplary embodiment of blind button member 726 is a substantially rod-shaped member sized to be disposed within receiving channel 738 of rotatable body 714. Exemplary embodiments may define specialized surface features such as recesses 731 and/or a network of ridges 737 and grooves 739.

In operation, the user presses button 707 to initiate the process of folding rear fork assembly 700. This action compresses spring 729 associated with button member 726 so button member slides inward inside button receiving channel 738. As the button member 726 slides inward, bearing ball 722 is urged from its locked position in contact with recess 723 and having no contact with concave portion 725 of button member 726 to a position in contact with concave portion 725 of button member 726. This movement of bearing ball 722 also urges the bearing ball 722 away from the first concave recess 724a of cam 712. With bearing ball 722 at least partially removed from first concave recess 724a, folding system 710 is an unlocked position. As such, rotatable body 714 can be rotated around the end of stationary body 712 about axle 416 into a folded position.

The user can effect this folding by grasping one or both of rear fork members 402 or rear wheel assembly 406. Coupler 404 provides an additional means to effect folding of rear fork assembly 400. Bearing ball 422 rolls along the cam surface 413 of cam 412, thereby facilitating the rotating movement of rotatable body 414. Once rotated into a folded position, bearing ball 422 rolls into second recess 424b of cam 412 so the joint locking assembly 410 is locked again. Springs 429 expand and button member 426 slides back out to its original position, thereby biasing bearing ball 422 in contact with second recess 424b of cam 412. It should be noted that this embodiment of folding mechanism can be advantageously operated with only one blind button member 726 because the rear fork assembly 700 rotates slightly upward to its new position after loading, and any gap will be "eaten" by a small rotation of the rear fork upward. Also, advantageously, even a substantial vertical force will not pull the blind button member 726 out of the rotatable body housing 714 because of the high friction force.

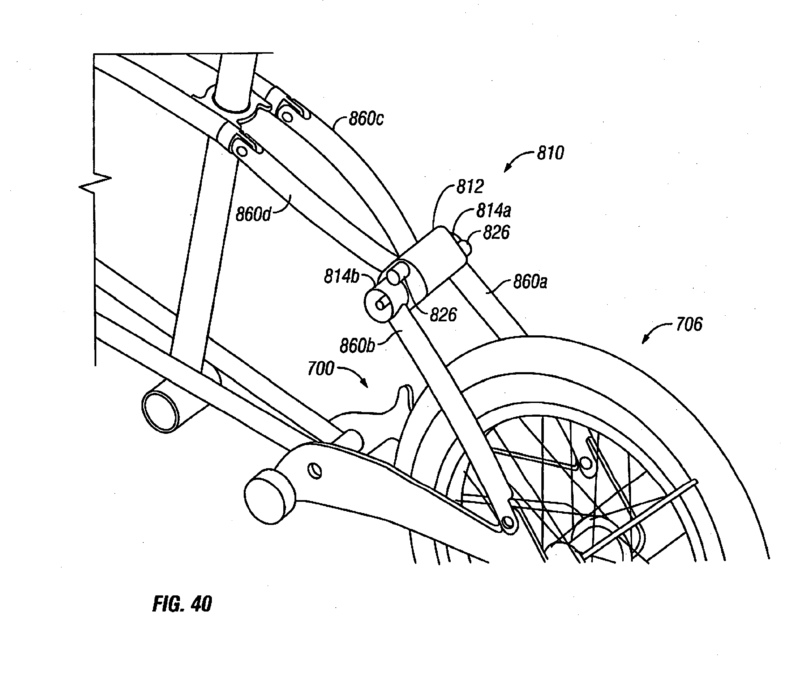

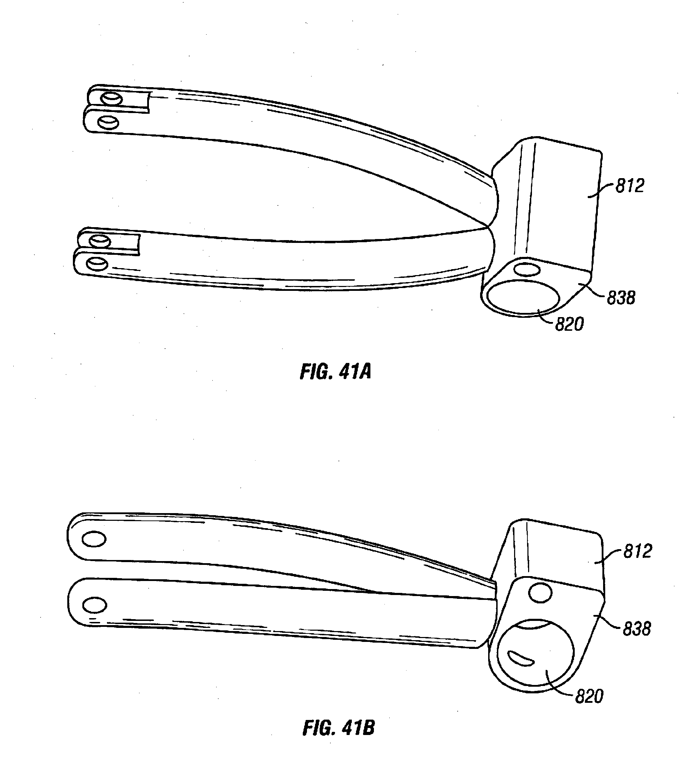

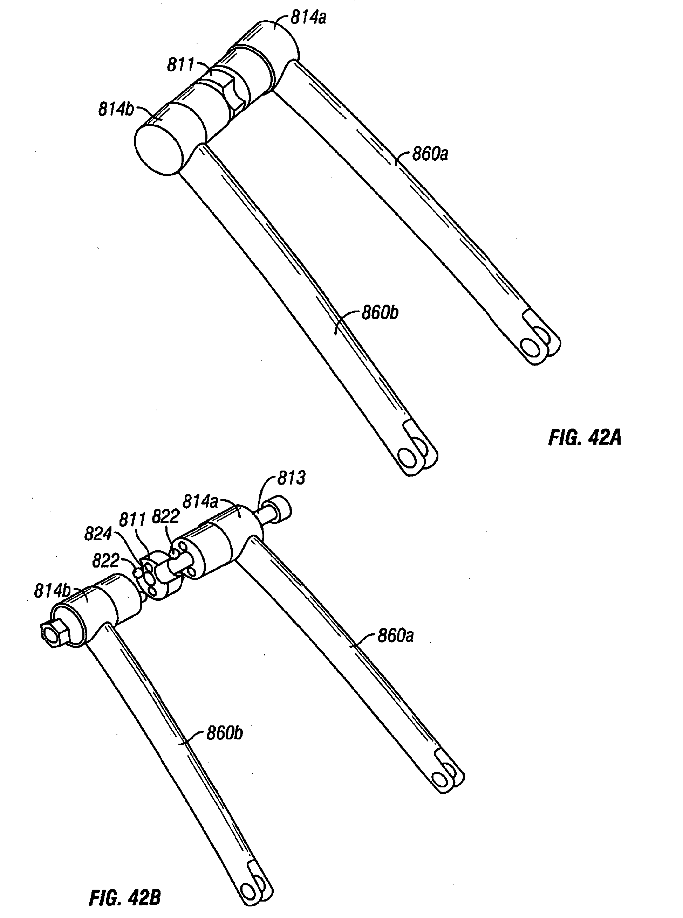

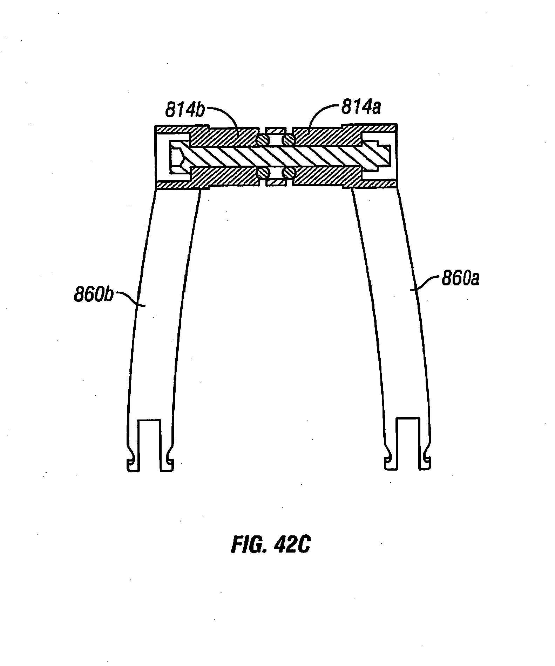

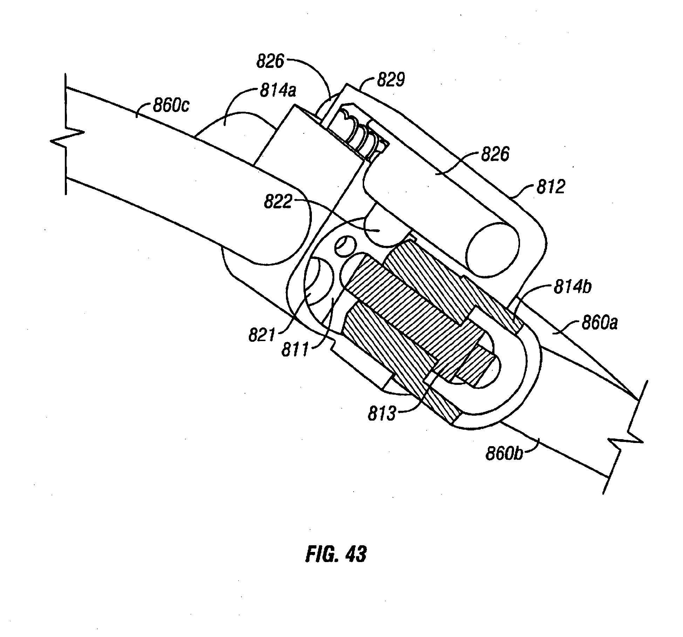

Exemplary embodiments of a folding system employed with foldable seat stays will be described with reference to FIGS. 40-45. Folding system 810 comprises stationary body 812, rotatable body 814 rotatably coupled to the stationary body 812, bearing ball 822 and one or more button members 826. As best seen in FIGS. 42A-42C, the rotatable body 814 may comprise two sub-bodies 814a, 814b threaded together along thread member 813 with a cam component 811 in between. Advantageously, the rotatable body 814 and cam component 811 can be assembled together with or welded to seat stays 860a, 860b and be rotated together as a rigid assembly.

The rotatable bodies 814a, 814b and cam component 811 are disposed within and rotatably coupled to stationary body 812. More particularly, the rotatable bodies 814a, 814b are slidably inserted through channel 820 of the stationary body 812. In exemplary embodiments, the stationary body 812 is fixedly attached to upper seat stay members 860c, 860d, which may be, in turn, rotatably coupled to one or more frame tubes. At least one side of stationary body 812 defines a button receiving channel 838, which receives a button member 826 and associated spring 829. Button member 826 defines a sloped recess 823, which slopes downward adjacent a rounded concave portion 825. Rounded concave portion 825 is sized to receive at least a portion of bearing ball 822. Button member 826 further defines a short channel 827 at one end. The short channel 827 is sized to receive a portion of a spring 829, which compresses when the user pushes button member 826.

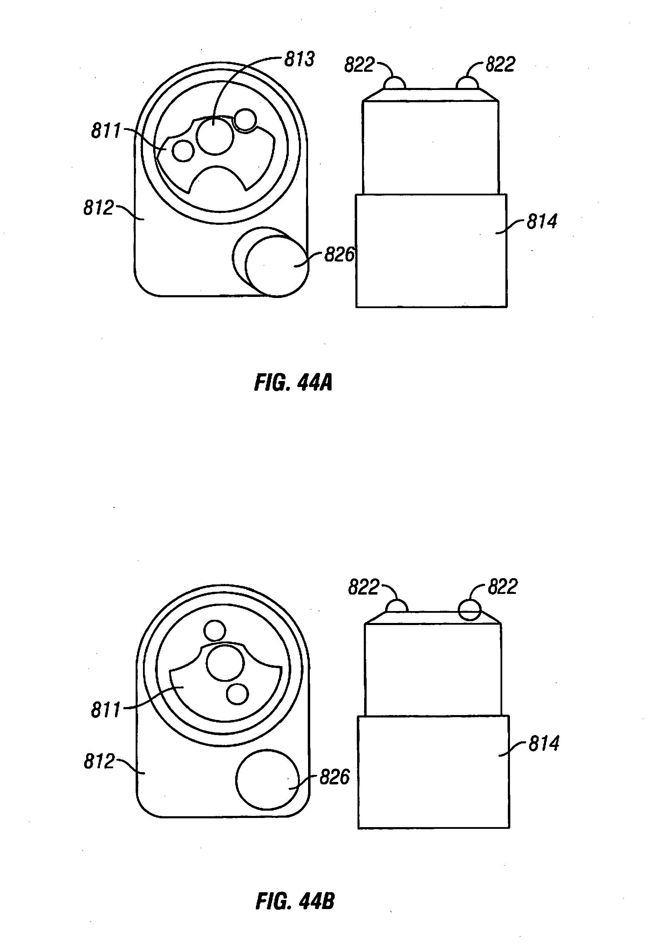

Bearing balls 822 are disposed between cam component 811 and stationary body 512 and can be seen in disassembled views in FIGS. 44A-B. The movement and relative location of bearing balls 822 moves the folding system 810 between a locked and an unlocked position. Cam component 811 defines at least one recess 824 sized to receive a portion of each bearing ball 822 when foldable seat stay 860 is in a riding position. In addition, cam component 811 may further define a secondary concave recess 821, which receives a portion of each bearing ball 822 when foldable foldable seat stay 860 is in a folded position.

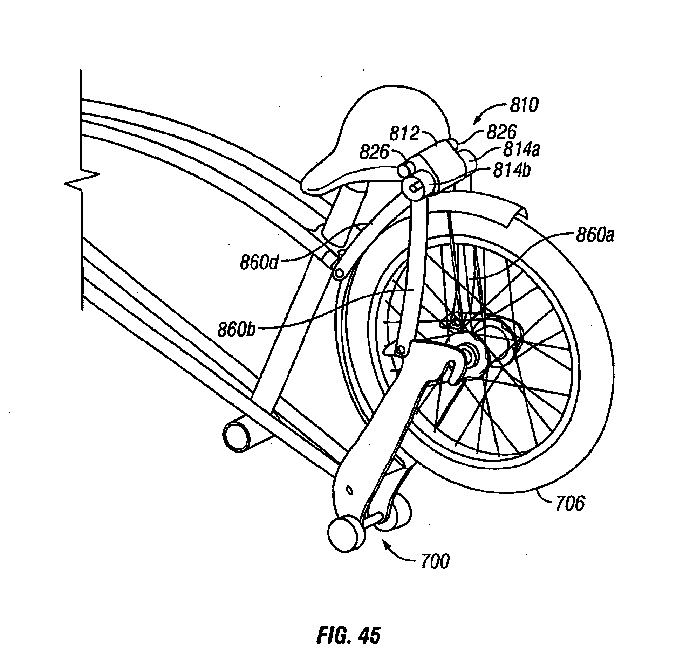

In operation, the user presses button members 826 to initiate the process of folding foldable seat stay 860. This action compresses the spring 829 associated with each button member 826 so each button member slides inward inside each respective button receiving channels 838a, 838b of the stationary body 812. As the button members 826 slide inward, bearing ball 822 is urged from its position contacting sloped recesses 823 of the button members to a position in rounded concave portions 825. This movement of bearing ball 822 also urges the bearing ball 822 away from the recess 824 of cam component 811. With bearing ball 822 at least partially removed from recess 824, folding system 810 is in an unlocked position. As such, rotatable body 814 can be rotated within stationary body 812 to move seat stays into a folded position, as shown in FIG. 45. The rolling of bearing ball 822 around the cam component 811 facilitates this rotation. To unfold foldable seat stay 860, the user simply presses button members 826 to initiate the unfolding process. The process operates essentially as described above except that rotatable body 814 moves in the opposite direction so bearing ball 822 rolls around the cam component 811 in the opposite direction and moves back to recess 824 of stationary body 812.

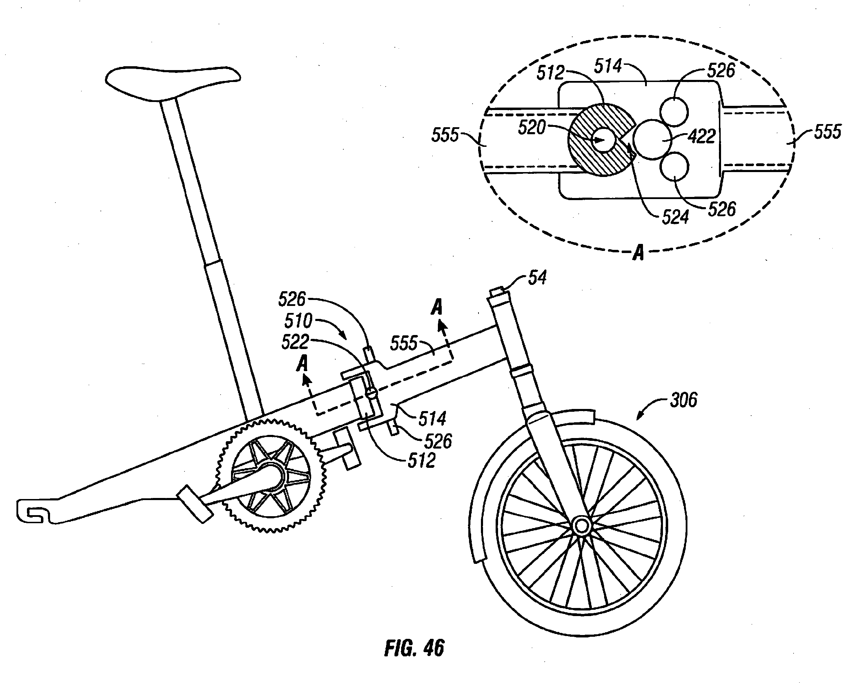

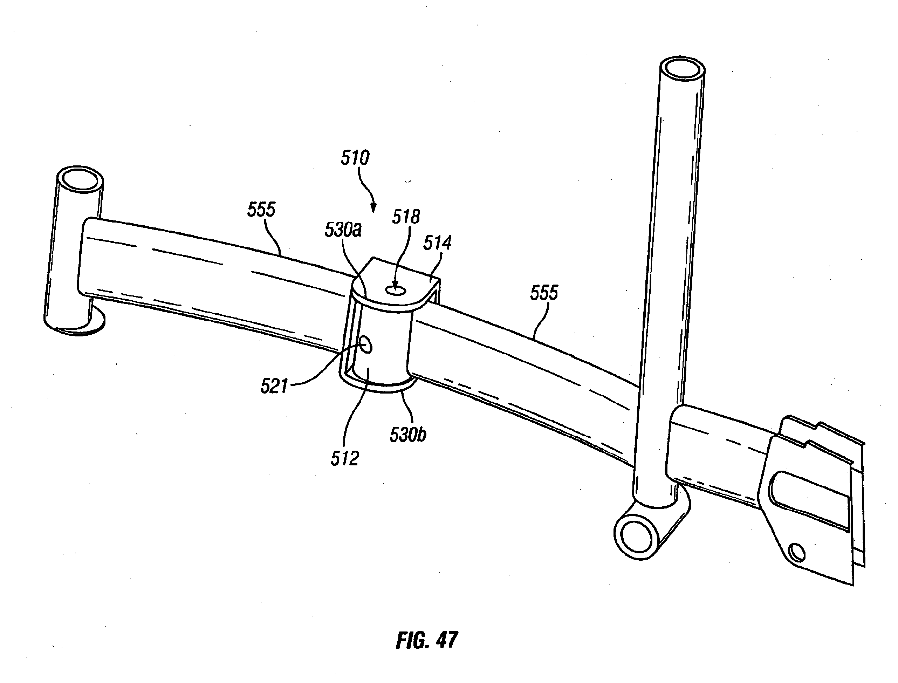

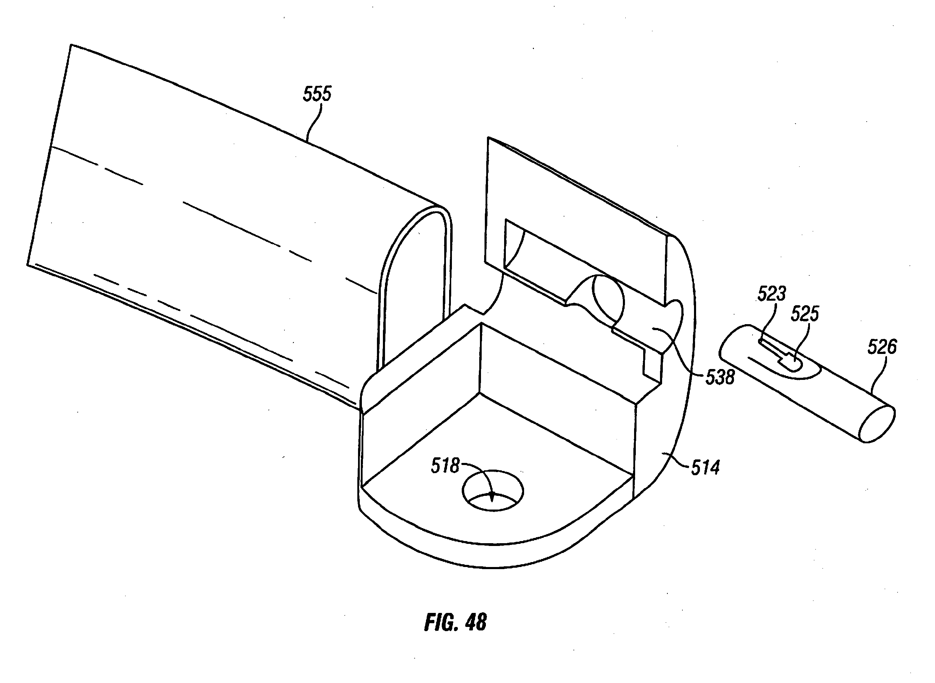

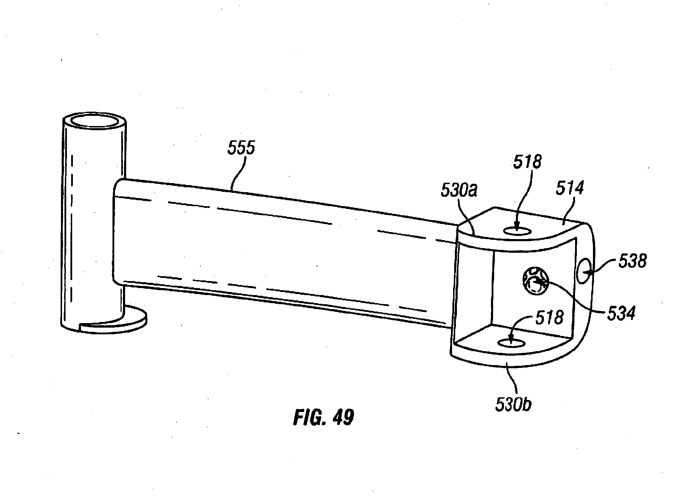

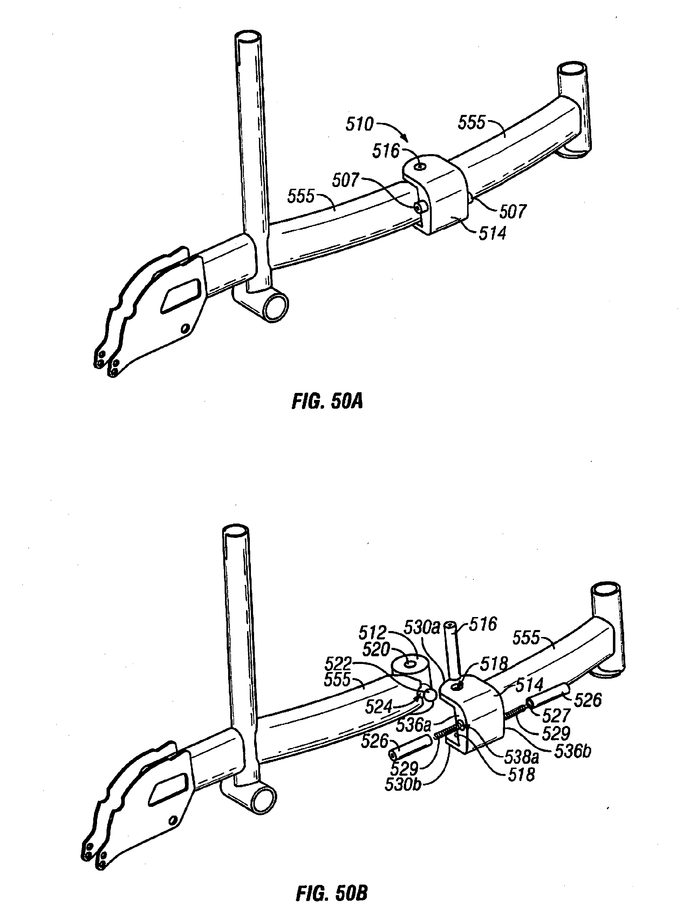

Referring to FIGS. 46-51, it can be seen that embodiments of disclosed folding systems can be employed in conjunction with a foldable down tube 555. Folding system 510 comprises stationary body 512, rotatable body 514 rotatably coupled to the stationary body 512, bearing ball 522 and one or more button members 526. Axle 516 serves to mount the rotatable body 514 onto stationary body 512 by being slidably inserted through receiving apertures 518 of the rotatable body 514 and channel 520 of the stationary body 512. Each rotatable body 514a, 514b is rotatable about a respective end of stationary body 512 via axle 516.

A bearing ball 522 is disposed between rotatable body 514 and stationary body 512. As described in detail herein, the movement and relative location of bearing ball 522 moves the folding system 410 between a locked and an unlocked position. Stationary body 512 defines at least one recess 524 sized to receive a portion of bearing ball 522 when foldable frame tube 555 is in a riding position. In addition, stationary body 512 may further define a secondary concave recess 521, which receives a portion of bearing ball 522 when foldable frame tube 555 is in a folded position. The folding system 510 further comprises one or more button members 526, which are substantially rod-shaped members sized to be disposed within rotatable bodies 514. Button member 526 defines a sloped recess 523, which slopes downward adjacent a rounded concave portion 525. Rounded concave portion 525 is sized to receive at least a portion of bearing ball 522. Button member 526 further defines a short channel 527 at one end. Button member 526 further defines a short channel 527 at one end. The short channel 527 is sized to receive a portion of a spring 529, which compresses when the user pushes the button member 526, as described in more detail below.

Rotatable body 514 has two extensions 530a, 530b at each end. Each extension 530 defines a receiving aperture 518 sized to receive axle 516 and secure the rotatable body 514 to the stationary body 512. Each side 536a, 536b of rotatable body 514 defines a button receiving channel 538a, 538b (not shown), each of which receives a button member 526 and associated spring 529. In exemplary embodiments, button receiving channels 538a, 538b are defined in rotatable body 514 such that they are parallel to each other and the inserted button members 526 are parallel to each other. Rotatable body 514 defines a center hole 534 to provide an access point for both button receiving channels 538a, 538b.

More particularly, bearing ball 522 is disposed in center hole 534 so that a portion of the bearing ball 522 contacts recess 524 of stationary body 512 and a portion of the bearing ball contacts each of the two button members 526. When the folding system 510 is in the unlocked position bearing ball 522 contacts rounded concave portions 525 of the button members 526 and has limited contact with the concave recess 524 of stationary body 512. When the folding system 510 is in a locked position bearing ball 522 contacts sloped recesses 523 of the button members 526 and has relatively more contact with the concave recess 524 of stationary body 512.

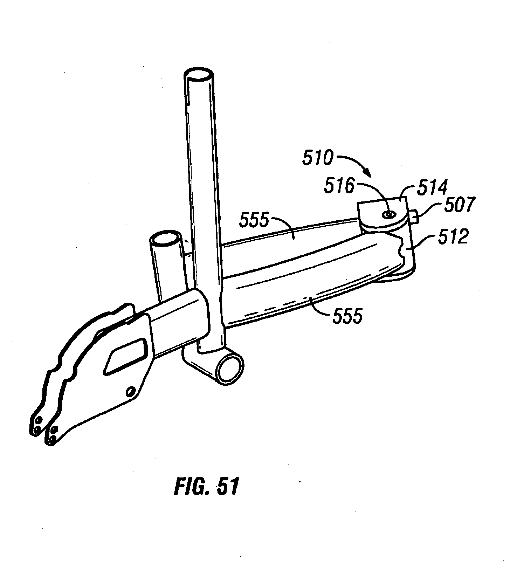

In operation, the user presses buttons 507 to initiate the process of folding foldable frame tube 555. This action compresses the spring 529 associated with each button member 526 so each button member slides inward inside each respective button receiving channel 538a, 538b. As the button members 526 slide inward, bearing ball 522 is urged from its position contacting sloped recesses 523 of the button members to a position in rounded concave portions 525. This movement of bearing ball 522 also urges the bearing ball 522 away from the recess 524 of cam 512. With bearing ball 522 at least partially removed from recess 524, folding system 510 is in an unlocked position. As such, rotatable body 514 can be rotated around the end of stationary body 512 about axle 516 to move frame tube 555 into a folded position, as shown in FIG. 51. The rolling of bearing ball 522 around the cylindrical stationary body 512 facilitates this rotation. To unfold foldable frame tube 555, the user simply presses buttons 507 to initiate the unfolding process. The process operates essentially as described above except that rotatable body 514 moves in the opposite direction so bearing ball 522 rolls around the cylindrical stationary body 512 in the opposite direction and moves back to recess 524 of stationary body 512.

Thus, it is seen that joint locking assemblies, systems and methods are provided. It should be understood that any of the foregoing configurations and specialized components may be interchangeably used with any of the systems of the preceding embodiments. Although preferred illustrative embodiments of the present invention are described hereinabove, it will be evident to one skilled in the art that various changes and modifications may be made therein without departing from the invention. It is intended in the appended claims to cover all such changes and modifications that fall within the scope of the invention.

## Claims

1. A joint locking assembly (10, 110, 210, 310, 410, 510, 610, 710, 810) comprising:
a bearing ball (22, 122, 222, 322, 422, 522, 622, 722, 822);
a first body (12, 112, 212, 312, 412, 512, 612, 712, 812) defining at least one bearing ball receiving space (24, 124, 224, 324, 424, 524, 624, 724, 824) sized to receive at least a portion of the bearing ball;
a second body (14, 114, 214, 314, 414, 514, 614, 714, 814) defining one or more channels (38, 138, 238, 338, 438, 538, 638, 738, 838) therein;
one or more button members (26, 126, 226, 326, 426, 526, 626, 726, 826) sized to be disposed in the channels (38, 138, 238, 338, 438, 538, 638, 738, 838), each button member defining a recess (23, 123, 223, 323, 423, 523, 623, 723, 823) and a rounded concave portion (25, 125, 225, 325, 425, 525, 625, 725, 825) sized to receive at least a portion of the bearing ball;
**characterized in that**:
in an unlocked position the bearing ball (22, 122, 222, 322, 422, 522, 622, 722, 822) contacts the rounded concave portions (25, 125, 225, 325, 425, 525, 625, 725, 825) of the button members (26, 126, 226, 326, 426, 526, 626, 726, 826) and has limited contact with the bearing ball receiving space (24, 124, 224, 324, 424, 524, 624, 724, 824) of the first body (12, 112, 212, 312, 412, 512, 612, 712, 812) and in a locked position the bearing ball contacts the recesses (23, 123, 223, 323, 423, 523, 623, 723, 823) of the button members and has relatively more contact with the bearing ball receiving space of the first body.

2. The joint locking assembly (10, 110, 210, 310, 410, 510, 610, 710, 810) of claim 1, wherein the first body (12, 112, 212, 312, 412, 512, 612, 712, 812) is rotatably coupled to the second body (14, 114, 214, 314, 414, 514, 614, 714, 814).

3. The joint locking assembly (10, 110, 210, 310, 410, 510, 610, 710, 810) of claim 1, wherein pressing or pulling the button members (26, 126, 226, 326, 426, 526, 626, 726, 826) moves the system from a locked position to an unlocked position.

4. The joint locking assembly (10, 110, 210, 310, 410, 510, 610, 710, 810) of claim 3, wherein pressing or pulling the button members (26, 126, 226, 326, 426, 526, 626, 726, 826) urges the bearing ball (22, 122, 222, 322, 422, 522, 622, 722, 822) from a location in contact with the recesses (23, 123, 223, 323, 423, 523, 623, 723, 823) of the button members to a location in contact with the rounded concave portions (25, 125, 225, 325, 425, 525, 625, 725, 825) of the button members.

5. The joint locking assembly (10, 110, 210, 310, 410, 510, 610, 710, 810) of claim 1, wherein the first body (12, 312, 412, 712) defines a second bearing ball receiving space (24b, 324b, 424b, 724b) to receive the bearing ball (22, 322, 422, 722) when the second body (14, 314, 414, 714) is in a folded position.

6. The joint locking assembly (10, 110, 210, 310, 410, 510, 610, 710, 810) of claim 1, wherein the button member (26, 126, 226, 326, 426, 526, 626, 726, 826) defines a partially hollow interior (27, 127, 227, 327, 427, 527, 627, 727, 827) housing a spring (29, 129, 229, 329, 429, 529, 629, 729, 829).

7. A method of folding mechanical components, comprising:
providing a first body (12, 112, 212, 312, 412, 512, 612, 712, 812), a second body (14, 114, 214, 314, 414, 514, 614, 714, 814) defining one or more channels (38, 138, 238, 338, 438, 538, 638, 738, 838) therein, the first body being rotatably coupled to the second body, and one or more button members (26, 126, 226, 326, 426, 526, 626, 726, 826) disposed in the channels;
**characterized by**:
providing a bearing ball (22, 122, 222, 322, 422, 522, 622, 722, 822) at a location between a bearing ball receiving space (24, 124, 224, 324, 424, 524, 624, 724, 824) in the first body and recesses (23, 123, 223, 323, 423, 523, 623, 723, 823) of the button members such that the bearing ball has substantial contact with the bearing ball receiving space of the first body;
displacing the bearing ball (22, 122, 222, 322, 422, 522, 622, 722, 822) such that it moves from a location in contact with the recesses (23, 123, 223, 323, 423, 523, 623, 723, 823) of the button members to a location in contact with rounded concave portions (25, 125, 225, 325, 425, 525, 625, 725, 825) of the button members (26, 126, 226, 326, 426, 526, 626, 726, 826) and such that the bearing ball has relatively less contact with the bearing ball receiving space (24, 124, 224, 324, 424, 524, 624, 724, 824) of the first body (12, 112, 212, 312, 412, 512, 612, 712, 812); and
rotating the first body relative to the second body.

8. The method of claim 7, wherein when the bearing ball (22, 122, 222, 322, 422, 522, 622, 722, 822) is displaced, the first body (12, 112, 212, 312, 412, 512, 612, 712, 812) is an unlocked position and is foldable by rotating it about a hinge.

9. The method of claim 7, wherein the displacing step comprises pressing or pulling the button members (26, 126, 226, 326, 426, 526, 626, 726, 826).

10. The method of claim 7, wherein each button member (26, 126, 226, 326, 426, 526, 626, 726, 826) defines a partially hollow interior (27, 127, 227, 327, 427, 527, 627, 727, 827) housing a spring (29, 129, 229, 329, 429, 529, 629, 729, 829).

11. A folding bicycle (1) comprising:
a frame (575) including a seat tube (565), a frame tube (555, 755) and a bearing tube (585);
a foldable fork assembly (300) coupled to the bearing tube (585) and having a wheel (306) mounted thereon;
a handlebar assembly (50, 150, 250) including at least two handlebars (52, 152, 252), the handlebar assembly rotatably coupled to the frame (575);
a joint locking assembly (10, 110, 210, 310, 410, 510, 610, 710, 810) including:
a rotatable body (14, 114, 214, 314, 414, 514, 614, 714, 814) rotatably coupled to a stationary body (12, 112, 212, 312, 412, 512, 612, 712, 812), the rotatable body defining one or more channels (38, 138, 238, 338, 438, 538, 638, 738, 838) therein;
a bearing ball (22, 122, 222, 322, 422, 522, 622, 722, 822);
a stationary body (12, 112, 212, 312, 412, 512, 612, 712, 812) defining at least one bearing ball receiving space (24, 124, 224, 324, 424, 524, 624, 724, 824) sized to receive at least a portion of the bearing ball;
**characterized by**
one or more button members (26, 126, 226, 326, 426, 526, 626, 726, 826) sized to be disposed in the channels, each button member defining a recess (23, 123, 223, 323, 423, 523, 623, 723, 823) with a rounded concave portion (25, 125, 225, 325, 425, 525, 625, 725, 825) sized to receive at least a portion of the bearing ball; wherein
in an unlocked position the bearing ball (22, 122, 222, 322, 422, 522, 622, 722, 822) contacts the rounded concave portions (25, 125, 225, 325, 425, 525, 625, 725, 825) of the button members (26, 126, 226, 326, 426, 526, 626, 726, 826) and has limited contact with the bearing ball receiving space (24, 124, 224, 324, 424, 524, 624, 724, 824) of the stationary body (12, 112, 212, 312, 412, 512. 612, 712, 812) and in a locked position the bearing ball contacts the recesses (23, 123, 223, 323, 423, 523, 623, 723, 823) of the button members and has relatively more contact with the bearing ball receiving space of the stationary body.

12. The folding bicycle (1) of claim 11, wherein pressing or pulling the button members (26, 126, 226, 326, 426, 526, 626, 726, 826) moves the joint locking assembly (10, 110, 210, 310, 410, 510, 610, 710, 810) from a locked position to an unlocked position.

13. The folding bicycle (1) of claim 12, wherein pressing the button members (26, 126, 226, 326, 426, 526, 626, 726, 826) urges the bearing ball (22, 122, 222, 322, 422, 522, 622, 722, 822) from a location in contact with the recesses (23, 123, 223, 323, 423, 523, 623, 723, 823) of the button members to a location in contact with the rounded concave portions (25, 125, 225, 325, 425, 525, 625, 725, 825) of the button members.

14. The folding bicycle (1) of claim 11, wherein the stationary body (12, 112, 212, 312, 412, 512, 612, 712, 812) is a handlebar mounting member coupled to the frame assembly (575) and the rotatable body (14, 114, 214, 314, 414, 514, 614, 714, 814) is a mounting assembly having a handlebar mounted thereon.

15. The folding bicycle (1) of claim 11, wherein the joint locking assembly (10, 11.0, 210, 310, 410, 510, 610, 710, 810) is part of the foldable fork assembly (300).

## Patentansprüche

1. Gelenkverriegelungsanordnung (10, 110, 210, 310, 410, 510, 610, 710, 810),
mit:
einer Lagerkugel (22, 122, 222, 322, 422, 522, 622, 722, 822),
einem ersten Teil (12, 112, 212, 312, 412, 512, 612, 712, 812), welches mindestens einen Lagerkugelaufnahmeraum (24, 124, 224, 324, 424, 524, 624, 724, 824) definiert, der in seiner Größe so bemessen ist, mindestens einen Teil der Lagerkugel aufzunehmen,
einem zweiten Teil (14, 114, 214, 314, 414, 514, 614, 714, 814), welches ein oder mehr Kanäle (38, 138, 238, 338, 438, 538, 638, 738, 838) darin definiert,
einem oder mehreren Knopfelementen (26, 126, 226, 326, 426, 526, 626, 726, 826), die in ihrer Größe ausgebildet sind, in den Kanälen (38, 138, 238, 338, 438, 538, 638, 738, 838) angeordnet zu werden, wobei jedes Knopfelement eine Ausnehmung (23, 123, 223, 323, 423, 523, 623, 723, 823) und einen abgerundeten konkaven Bereich (25, 125, 225, 325, 425, 525, 625, 725, 825) definiert, der in seiner Größe so bemessen ist, mindestens einen Teil der Lagerkugel aufzunehmen,
**dadurch gekennzeichnet,**
**dass** in einer nicht verriegelten Stellung die Lagerkugel (22, 122, 222, 322, 422, 522, 622, 722, 822) die abgerundeten konkaven Bereiche (25, 125, 225, 325, 425, 525, 625, 725, 825) der Knopfelemente (26, 126, 226, 326, 426, 526, 626, 726, 826) berührt und einen beschränkten Kontakt mit dem Lagerkugelaufnahmeraum (24, 124, 224, 324, 424, 524, 624, 724, 824) des ersten Teils (12, 112, 212, 312, 412, 512, 612, 712, 812) aufweist und
**dass** in einer verriegelten Stellung die Lagerkugel die Ausnehmungen (23, 123, 223, 323, 423, 523, 623, 723, 823) der Knopfelemente berührt und relativ mehr Kontakt mit dem Lagerkugelaufnahmeraum des ersten Teils aufweist.

2. Gelenkverriegelungsanordnung (10, 110, 210, 310, 410, 510, 610, 710, 810) nach Anspruch 1,
wobei das erste Teil (12, 112, 212, 312, 412, 512, 612, 712, 812) rotierbar am zweiten Teil (14, 114, 214, 314, 414, 514, 614, 714, 814) gekoppelt ist.

3. Gelenkverriegelungsanordnung (10, 110, 210, 310, 410, 510, 610, 710, 810) nach Anspruch 1,
wobei Drücken oder Ziehen der Knopfelemente (26, 126, 226, 326, 426, 526, 626, 726, 826) das System von einer verriegelten Stellung zu einer nicht verriegelten Stellung bewegt.

4. Gelenkverriegelungsanordnung (10, 110, 210, 310, 410, 510, 610, 710, 810) nach Anspruch 3,
wobei Drücken und Ziehen der Knopfelemente (26, 126, 226, 326, 426, 526, 626, 726, 826) die Lagerkugel (22, 122, 222, 322, 422, 522, 622, 722, 822) von einer Stelle in Kontakt mit den Ausnehmungen (23, 123, 223, 323, 423, 523, 623, 723, 823) der Knopfelemente zu einer Stelle in Kontakt mit den abgerundeten konkaven Bereichen (25, 125, 225, 325, 425, 525, 625, 725, 825) der Knopfelemente treibt.

5. Gelenkverriegelungsanordnung (10, 110, 210, 310, 410, 510, 610, 710, 810) nach Anspruch 1,
wobei das erste Teil (12, 312, 412, 712) einen zweiten Lagerkugelaufnahmeraum (24b, 324b, 424b, 724b) definiert, um die Lagerkugel (22, 322, 422, 722) aufzunehmen, wenn sich das zweite Teil (14, 314, 414, 714) in einer zusammengelegten Stellung befindet.

6. Gelenkverriegelungsanordnung (10, 110, 210, 310, 410, 510, 610, 710, 810) nach Anspruch 1,
wobei das Knopfelement (26, 126, 226, 326, 426, 526, 626, 726, 826) ein teilweise hohles Inneres (27, 127, 227, 327, 427, 527, 627, 727, 827) definiert, welches eine Feder (29, 129, 229, 329, 429, 529, 629, 729, 829) umgibt.

7. Verfahren zum Zusammenlegen mechanischer Teile,
mit:
Bereitstellen eines ersten Teils (12, 112, 212, 312, 412, 512, 612, 712, 812), eines zweiten Teils (14, 114, 214, 314, 414, 514, 614, 714, 814), welches ein oder mehrere Kanäle (38, 138, 238, 338, 438, 538, 638, 738, 838) darin definiert, wobei das erste Teil rotierbar am zweiten Teil gekoppelt ist, und eines oder mehrerer Knopfelemente (26, 126, 226, 326, 426, 526, 626, 726, 826), die in den Kanälen angeordnet sind;
**gekennzeichnet durch:**
Bereitstellen einer Lagerkugel (22, 122, 222, 322, 422, 522, 622, 722, 822) an einer Stelle zwischen einem Lagerkugelaufnahmeraum (24, 124, 224, 324, 424, 524, 624, 724, 824) am ersten Teil und Ausnehmungen (23, 123, 223, 323, 423, 523, 623, 723, 823) der Knopfelemente derart, dass die Lagerkugel im Wesentlichen einen Kontakt mit dem Lagerkugelaufnahmeraum des ersten Teils ausbildet;
Verschieben der Lagerkugel (22, 122, 222, 322, 422, 522, 622, 722, 822) derart, dass diese sich von einer Stelle in Kontakt mit den Ausnehmungen (23, 123, 223, 323, 423, 523, 623, 723, 823) der Knopfelemente zu einer Stelle in Kontakt mit abgerundeten konkaven Bereichen (25, 125, 225, 325, 425, 525, 625, 725, 825) der Knopfelemente (26, 126, 226, 326, 426, 526, 626, 726, 826) hin verschiebt und derart, dass die Lagerkugel relativ weniger Kontakt mit dem Lagerkugelaufnahmeraum (24, 124, 224, 324, 424, 524, 624, 724, 824) des ersten Teils (12, 112, 212, 312, 412, 512, 612, 712, 812) hat, und
Rotieren des ersten Teils relativ zum zweiten Teil.

8. Verfahren nach Anspruch 7,
wobei, wenn die Lagerkugel (22, 122, 222, 322, 422, 522, 622, 722, 822) verschoben ist, das erste Teil (12, 112, 212, 312, 412, 512, 612, 712, 812) sich in einer nicht zusammengelegten Stellung befindet und zusammengelegt wird durch Rotieren um ein Scharnier.

9. Verfahren nach Anspruch 7,
wobei der Verschiebungsschritt ein Drücken oder Ziehen der Knopfelemente (26, 126, 226, 326, 426, 526, 626, 726, 826) aufweist.

10. Verfahren nach Anspruch 7,
wobei jedes Knopfelement (26, 126, 226, 326, 426, 526, 626, 726, 826) ein teilweise hohles Inneres (27, 127, 227, 327, 427, 527, 627, 727, 827) definiert, welches eine Feder (29, 129, 229, 329, 429, 529, 629, 729, 829) umgibt.

11. Zusammenlegbares Fahrrad (1),
mit:
einem Rahmen (575) mit einer Sitzröhre (565), einer Rahmenröhre (555, 755) und einer Lagerröhre (585);
einer zusammenlegbaren Gabelanordnung (300), welche an die Lagerröhre (585) gekoppelt ist und ein daran gefestigtes Rad (306) aufweist,
eine Griffstangenanordnung (50, 150, 250) mit mindestens zwei Griffstangen (52, 152, 252), wobei die Griffstangenanordnung rotierbar am Rahmen (575) gekoppelt ist,
einer Gelenkverriegelungsanordnung (10, 110, 210, 310, 410, 510, 610, 710, 810) mit:
einem rotierbaren Teil (14, 114, 214, 314, 414, 514, 614, 714, 814), welches drehbar an ein stationäres Teil (12, 112, 212, 312, 412, 512, 612, 712, 812) gekoppelt ist und welches ein oder mehr Kanäle (38, 138, 238, 338, 438, 538, 638, 738, 838) darin definiert,
einer Lagerkugel (22, 122, 222, 322, 422, 522, 622, 722, 822),
einem stationären Teil (12, 112, 212, 312, 412, 512, 612, 712, 812), welches mindestens einen Lagerkugelaufnahmeraum (24, 124, 224, 324, 424, 524, 624, 724, 824) definiert, der in seiner Größe so bemessen ist, mindestens einen Teil der Lagerkugel aufzunehmen,
**gekennzeichnet durch** ein oder mehrere Knopfelemente (26, 126, 226, 326, 426, 526, 626, 726, 826), die in ihrer Größe ausgebildet sind, in den Kanälen (38, 138, 238, 338, 438, 538, 638, 738, 838) angeordnet zu werden, wobei jedes Knopfelement eine Ausnehmung (23, 123, 223, 323, 423, 523, 623, 723, 823) mit einem abgerundeten konkaven Bereich (25, 125, 225, 325, 425, 525, 625, 725, 825) definiert, der in seiner Größe so bemessen ist, mindestens einen Teil der Lagerkugel aufzunehmen,
wobei in einer nicht verriegelten Stellung die Lagerkugel (22, 122, 222, 322, 422, 522, 622, 722, 822) die abgerundeten konkaven Bereiche (25, 125, 225, 325, 425, 525, 625, 725, 825) der Knopfelemente (26, 126, 226, 326, 426, 526, 626, 726, 826) berührt und einen beschränkten Kontakt mit dem Lagerkugelaufnahmeraum (24, 124, 224, 324, 424, 524, 624, 724, 824) des stationären Teils (12, 112, 212, 312, 412, 512, 612, 712, 812) aufweist und
wobei in einer verriegelten Stellung die Lagerkugel die Ausnehmungen (23, 123, 223, 323, 423, 523, 623, 723, 823) der Knopfelemente berührt und relativ mehr Kontakt mit dem Lagerkugelaufnahmeraum des stationären Teils aufweist.

12. Zusammenlegbares Fahrrad (1) nach Anspruch 11,
wobei Drücken oder Ziehen der Knopfelemente (26, 126, 226, 326, 426, 526, 626, 726, 826) die Gelenkverriegelungsanordnung (10, 110, 210, 310, 410, 510, 610, 710, 810) von einer verriegelten Stellung zu einer nicht verriegelten Stellung bewegt.

13. Zusammenlegbares Fahrrad (1) nach Anspruch 12,
wobei Drücken und Ziehen der Knopfelemente (26, 126, 226, 326, 426, 526, 626, 726, 826) die Lagerkugel (22, 122, 222, 322, 422, 522, 622, 722, 822) von einer Stelle in Kontakt mit den Ausnehmungen (23, 123, 223, 323, 423, 523, 623, 723, 823) der Knopfelemente zu einer Stelle in Kontakt mit den abgerundeten konkaven Bereichen (25, 125, 225, 325, 425, 525, 625, 725, 825) der Knopfelemente treibt.

14. Zusammenlegbares Fahrrad (1) nach Anspruch 11,
wobei das stationäre Teil (12, 112, 212, 312, 412, 512, 612, 712, 812) ein Griffstangenbefestigungselement ist, welches an die Rahmenanordnung (575) gekoppelt ist, und
wobei das rotierbare Teil (14, 114, 214, 314, 414, 514, 614, 714, 814) eine Befestigungsanordnung mit einem daran gefestigten Handgriff ist.

15. Zusammenlegbares Fahrrad (1) nach Anspruch 11,
wobei die Gelenkverriegelungsanordnung (10, 110, 210, 310, 410, 510, 610, 710, 810) ein Teil der zusammenlegbaren Gabelanordnung (300) ist.

## Revendications

1. Ensemble de blocage d'articulation (10, 110, 210, 310, 410, 510, 610, 710, 810) comprenant :
une bille de roulement (22, 122, 222, 322, 422, 522, 622, 822) ;
un premier corps (12, 112, 212, 312, 412, 512, 612, 712, 812) qui définit au moins un espace de réception de bille de roulement (24, 124, 224, 324, 424, 524, 624, 724, 824) dimensionné pour recevoir une partie au moins de la bille de roulement ;
un second corps (14, 114, 214, 314, 414, 514, 614, 714, 814) qui définit, à l'intérieur, un ou plusieurs conduits (38, 138, 238, 338, 438, 538, 638, 738, 838) ;
un ou plusieurs organes formant boutons (26, 126, 226, 326, 426, 526, 626, 726, 826) qui sont dimensionnés pour être disposés dans les conduits (28, 138, 238, 338, 438, 538, 638, 738, 838), chaque organe formant bouton définissant un creux (23, 123, 223, 323, 423, 523, 623, 723, 823) et une partie concave arrondie (25, 125, 225, 325, 425, 525, 625, 725, 825) dimensionnée pour recevoir une partie au moins de la bille de roulement ;
**caractérisé en ce que** :
dans une position débloquée, la bille de roulement (22, 122, 222, 322, 422, 522, 622, 722, 822) touche les parties concaves arrondies (25, 125, 225, 325, 425, 525, 625, 725, 825) des organes formant boutons (26, 126, 226, 326, 426, 526, 626, 726, 826) et a un contact limité avec l'espace de réception de bille de roulement (24, 124, 224, 324, 424, 524, 624, 724, 824) du premier corps (12, 112, 212, 312, 412, 512, 612, 712, 812), et dans une position bloquée, la bille de roulement touche les creux (23, 123, 223, 323, 423, 523, 623, 723, 823) des organes formant boutons et a comparativement plus de contact avec l'espace de réception de bille de roulement du premier corps.

2. Ensemble de blocage d'articulation (10, 110, 210, 310, 410, 510, 610, 710, 810) de la revendication 1, dans lequel le premier corps (12, 112, 212, 312, 412, 512, 612, 712, 812) est accouplé en rotation au second corps (14, 114, 214, 314, 414, 514, 614, 714, 814).

3. Ensemble de blocage d'articulation (10, 110, 210, 310, 410, 510, 610, 710, 810) de la revendication 1, dans lequel une pression ou une traction exercée sur les organes formant boutons (26, 126, 226, 326, 426, 526, 626, 726, 826) déplace le système d'une position bloquée jusqu'à une position débloquée.

4. Ensemble de blocage d'articulation (10, 110, 210, 310, 410, 510, 610, 710, 810) de la revendication 3, dans lequel une pression ou une traction exercée sur les organes formant boutons (26, 126, 226, 326, 426, 526, 626, 726, 826) contraint la bille de roulement (22, 122, 222, 322, 422, 522, 622, 722, 822) pour la faire passer d'un emplacement où elle est en contact avec les creux (23, 123, 223, 323, 423, 523, 623, 723, 823) des organes formant boutons, à un emplacement où elle est en contact avec les parties concaves arrondies (25, 125, 225, 325, 425, 525, 625, 725, 825) des organes formant boutons.

5. Ensemble de blocage d'articulation (10, 110, 210, 310, 410, 510, 610, 710, 810) de la revendication 1, dans lequel le premier corps (12, 312, 412, 712) définit un second espace de réception de bille de roulement (24b, 324b, 424b, 724b) pour recevoir la bille de roulement (22, 322, 422, 722) quand le second corps (14, 314, 414, 714) est dans une position repliée.

6. Ensemble de blocage d'articulation (10, 110, 210, 310, 410, 510, 610, 710, 810) de la revendication 1, dans lequel l'organe formant bouton (26, 126, 226, 326, 426, 526, 626, 726, 826) définit un intérieur (27, 127, 227, 327, 427, 527, 627, 727, 827) partiellement creux dans lequel est logé un ressort (29, 129, 229, 329, 429, 529, 629, 729, 829).

7. Procédé pour replier des composants mécaniques, comprenant :
l'étape qui consiste à prévoir un premier corps (12, 112, 212, 312, 412, 512, 612, 712, 812), un second corps (14, 114, 214, 314, 414, 514, 614, 714, 814) qui définit, à l'intérieur, un ou plusieurs conduits (38, 138, 238, 338, 438, 538, 638, 738, 838), le premier corps étant accouplé en rotation au second, et un ou plusieurs organes formant boutons (26, 126, 226, 326, 426, 526, 626, 726, 826) qui sont disposés dans les conduits ;
**caractérisé par** les étapes qui consistent :
à prévoir une bille de roulement (22, 122, 222, 322, 422, 522, 622, 722, 822) à un endroit situé entre un espace de réception de bille (24, 124, 224, 324, 424, 524, 624, 724, 824) prévu dans le premier corps, et des creux (23, 123, 223, 323, 423, 523, 623, 723, 823) des organes formant boutons de telle sorte que la bille touche en grande partie ledit espace de réception de bille de roulement du premier corps ;
à déplacer la bille (22, 122, 222, 322, 322, 422, 522, 622, 722, 822) de telle sorte qu'elle passe d'un emplacement où elle touche les creux (23, 123, 223, 323, 423, 523, 623, 723, 823) des organes formant boutons (26, 126, 226, 326, 426, 526, 626, 726, 826), à un emplacement où elle touche les parties concaves arrondies (25, 125, 225, 325, 425, 525, 625, 725, 825) des organes formant boutons (26, 126, 226, 326, 426, 526, 626, 726, 826), et de telle sorte que la bille de roulement ait comparativement moins de contact avec l'espace de réception de bille de roulement (24, 124, 224, 324, 424, 524, 624, 724, 824) du premier corps (12, 112, 212, 312, 412, 512, 612, 712, 812) ; et
à tourner le premier corps par rapport au second.

8. Procédé de la revendication 7, étant précisé que lorsque la bille de roulement (22, 122, 222, 322, 422, 522, 622, 722, 822) est déplacée, le premier corps (12, 112, 212, 312, 412, 512, 612, 712, 812) est en position débloquée, et on peut le replier en le faisant pivoter sur une charnière.

9. Procédé de la revendication 7, étant précisé que l'étape de déplacement comprend une pression ou une traction exercée sur les organes formant boutons (26, 126, 226, 326, 426, 526, 626, 726, 826).

10. Procédé de la revendication 7, étant précisé que chaque organe formant bouton (26, 126, 226, 326, 426, 526, 626, 726, 826) définit un intérieur (27, 127, 227, 327, 427, 527, 627, 727, 827) partiellement creux dans lequel est logé un ressort (29, 129, 229, 329, 429, 529, 629, 729, 829).

11. Vélo pliant (1) comprenant :
un cadre (575) pourvu d'un tube de selle (565), d'un tube oblique (555, 755) et d'un tube porteur (585) ;
un ensemble pliant formant fourche (300) qui est accouplé au tube porteur (585) et sur lequel est montée une roue (306) ;
un ensemble formant guidon (50, 150, 250) qui présente au moins deux guidons (52, 152, 252), ledit ensemble formant guidon étant accouplé au cadre (575) ;
un ensemble de blocage d'articulation (10, 110, 210, 310, 410, 510, 610, 710, 810) comportant :
un corps rotatif (14, 114, 214, 314, 414, 514, 614, 714, 814) accouplé en rotation à un corps fixe (12, 112, 212, 312, 412, 512, 612, 712, 812), le corps rotatif définissant, à l'intérieur, un ou plusieurs conduits (38, 138, 238, 338, 438, 538, 638, 738, 838) ;
une bille de roulement (22, 122, 222, 322, 422, 522, 622, 722, 822) ;
un corps fixe (12, 112, 212, 312, 412, 512, 612, 712, 812) qui définit au moins un espace de réception de bille de roulement (24, 124, 224, 324, 424, 524, 624, 724, 824) dimensionné pour recevoir une partie au moins de la bille de roulement ;
**caractérisé par**
un ou plusieurs organes formant boutons (26, 126, 226, 326, 426, 526, 626, 726, 826) qui sont dimensionnés pour être disposés dans les conduits, chaque organe formant bouton définissant un creux (23, 123, 223, 323, 423, 523, 623, 723, 823) avec une partie concave arrondie (25, 125, 225, 325, 425, 525, 625, 725, 825) dimensionnée pour recevoir une partie au moins de la bille de roulement ; étant précisé
que dans une position débloquée, la bille de roulement (22, 122, 222, 322, 422, 522, 622, 722, 822) touche les parties concaves arrondies (25, 125, 225, 325, 425, 525, 625, 725, 825) des organes formant boutons (26, 126, 226, 326, 426, 526, 626, 726, 826) et a un contact limité avec l'espace de réception de bille de roulement (24, 124, 224, 324, 424, 524, 624, 724, 824) du corps fixe (12, 112, 212, 312, 412, 512, 612, 712, 812), et que dans une position bloquée, la bille de roulement touche les creux (23, 123, 223, 323, 423, 523, 623, 723, 823) des organes formant boutons et a comparativement plus de contact avec l'espace de réception de bille de roulement du corps fixe.

12. Vélo pliant (1) de la revendication 11, dans lequel une pression ou une traction exercée sur les organes formant boutons (26, 126, 226, 326, 426, 526, 626, 726, 826) déplace l'ensemble de blocage d'articulation (10, 110, 210, 310, 410, 510, 610, 710, 810) d'une position bloquée jusqu'à une position débloquée.

13. Vélo pliant (1) de la revendication 12, dans lequel une pression exercée sur les organes formant boutons (26, 126, 226, 326, 426, 526, 626, 726, 826) contraint la bille de roulement (22, 122, 222, 322, 422, 522, 622, 722, 822) pour la faire passer d'un emplacement où elle est en contact avec les creux (23, 123, 223, 323, 423, 523, 623, 723, 823) des organes formant boutons, à un emplacement où elle est en contact avec les parties concaves arrondies (25, 125, 225, 325, 425, 525, 625, 725, 825) des organes formant boutons.

14. Vélo pliant (1) de la revendication 11, dans lequel le corps fixe (12, 112, 212, 312, 412, 512, 612, 712, 812) est un élément de montage de guidon qui est accouplé à l'ensemble formant cadre (575), et le corps rotatif (14, 114, 214, 314, 414, 514, 614, 714, 814) est un ensemble de montage sur lequel est monté un guidon.

15. Vélo pliant (1) de la revendication 11, dans lequel l'ensemble de blocage d'articulation (10, 110, 210, 310, 410, 510, 610, 710, 810) fait partie de l'ensemble pliant formant fourche (300).
